# EUROPEAN PATENT APPLICATION

(11) **EP 4 626 056 A1**
(43) Date of publication of application: **01.10.2025**
(21) Application number: 22967635.8
(22) Date of filing: 09.12.2022
(51) Int. Cl.: H04W 24/02

(54) **ELECTRICAL TILTING DEVICE MANAGEMENT METHOD AND COMMUNICATION APPARATUS**

(71) Applicant: Huawei Technologies Co., Ltd., Shenzhen, Guangdong 518129 (CN)
(72) Inventor: XU, Jian, Shenzhen, Guangdong 518129 (CN); WANG, Qingjiang, Shenzhen, Guangdong 518129 (CN); XIE, Benhua, Shenzhen, Guangdong 518129 (CN); MA, Ning, Shenzhen, Guangdong 518129 (CN)
(74) Representative: Maiwald GmbH
(86) International application number: PCT/CN2022/137961
(87) International publication number: WO 2024/119487

(57) **Abstract**

This application provides a method for managing a remote electrical tilt device and a communication apparatus. The method can be applied to a technical field including a multi-band antenna. The method includes: A first communication apparatus generates first information, where the first information is used by a second communication apparatus to determine a first mapping table, and each mapping relationship in the first mapping table indicates a correspondence between one remote electrical tilt device and one or more cells; and the first communication apparatus sends the first information to the second communication apparatus, where the first communication apparatus manages at least one remote electrical tilt device and at least two cells. **In** this way, this application supports enhancement of accuracy of performing electrical tilting on a cell tilt.

## Description

### TECHNICAL FIELD

This application relates to the field of communication technologies, and more specifically, to a method for managing a remote electrical tilt device and a communication apparatus.

### BACKGROUND

With continuous evolution of network standards, a communication network can support increasingly more frequency bands. For example, the communication network can support frequency bands such as 700 megahertz (megahertz, MHz), 800 MHz, 900 MHz, 1800 MHz, 2100 MHz, 2600 MHz, and 3500 MHz. However, there is the following problem that increasingly more antennas need to be installed on an antenna panel. Consequently, space limitation of the antenna panel becomes a bottleneck of deployment of base stations.

To save space of the antenna panel, a concept of a multi-band antenna is proposed currently, that is, one physical antenna can support a plurality of frequency bands. Although the multi-band antenna can save the space of the antenna panel, this also poses a challenge to management of a remote electrical tilt device of the multi-band antenna. For example, how to accurately perform electrical tilting on a cell tilt corresponding to each frequency band supported by the multi-band antenna is a problem.

Currently, a solution for performing electrical tilting on a cell tilt in a multi-band antenna scenario is mainly implemented through a manual means. This limits applicability of the solution, and also causes an adjustment error. Therefore, how to enhance accuracy of performing electrical tilting on the cell tilt is an urgent technical problem to be resolved.

### SUMMARY

This application provides a method for managing a remote electrical tilt device and a communication apparatus, to enhance accuracy of performing electrical tilting on a cell tilt.

According to a first aspect, a method for managing a remote electrical tilt device is provided. The method is applied to a first communication apparatus side, a first communication apparatus manages at least one remote electrical tilt device and at least two cells, and the method includes: generating first information, where the first information is used for determining a first mapping table, and each mapping relationship in the first mapping table indicates a correspondence between one remote electrical tilt device and one or more cells; and sending the first information to a second communication apparatus.

Specifically, that each mapping relationship in the first mapping table indicates a correspondence between one remote electrical tilt device and one or more cells may be that each mapping relationship indicates a correspondence between an identity of the one remote electrical tilt device and an identity of the one or more cells. In a possible implementation, the identity of the remote electrical tilt device is a serial number of the remote electrical tilt device, the identity of the cell is a cell identity, and a serial number of one remote electrical tilt device corresponds to a cell identity of one or more cells. Therefore, each mapping relationship in the first mapping table may indicate a correspondence between a serial number of one remote electrical tilt device and a cell identity of one or more cells, to associate the remote electrical tilt device with the cell.

The first communication apparatus generates the first information used for determining the first mapping table. In this application, the correspondence between a remote electrical tilt device and a cell that are managed by the first communication apparatus can be obtained in an automatic manner, so that a manual operation of a user is omitted, and user experience can be improved. In addition, when quantities of remote electrical tilt devices and cells that are managed by the first communication apparatus change, the foregoing solution can also help obtain an updated correspondence between a remote electrical tilt device and a cell.

According to the foregoing solution, in this application, centralized management of a remote electrical tilt device can be supported in a "what you see is what you get" manner. For example, when electrical tilting is performed on a tilt of a cell, an association relationship between the remote electrical tilt device (or a serial number of the remote electrical tilt device) and the cell (or a cell identity of the cell) may be directly displayed. For example, when an administrator wants to adjust a tilt of a cell, the administrator may set a tilt adjustment command of the cell. The first communication apparatus or the second communication apparatus may find, by using the first mapping table, a remote electrical tilt device corresponding to the cell, so that the tilt of the corresponding cell may be adjusted by using the remote electrical tilt device.

In addition, the foregoing technical solution can enhance accuracy of performing electrical tilting on the cell tilt, and can avoid an adjustment error.

In a possible implementation, the first communication apparatus supports at least two frequency bands, and the first information includes at least one of the following: the first mapping table, a second mapping table, or a third mapping table. Each mapping relationship in the second mapping table indicates a correspondence between one remote electrical tilt device and one frequency band, each mapping relationship in the third mapping table indicates a correspondence between one cell and one frequency band, and the first mapping table is determined based on the second mapping table and the third mapping table.

Specifically, that each mapping relationship in the second mapping table indicates a correspondence between one remote electrical tilt device and one frequency band may be that each mapping relationship indicates a correspondence between a serial number of the one remote electrical tilt device and the one frequency band. Therefore, each mapping relationship in the second mapping table may indicate a correspondence between a serial number of one remote electrical tilt device and one frequency band. Similarly, that each mapping relationship in the third mapping table indicates a correspondence between one cell and one frequency band may be that each mapping relationship indicates a correspondence between a cell identity of the one cell and the one frequency band. Therefore, each mapping relationship in the third mapping table may indicate a correspondence between a cell identity of one cell and one frequency band.

Specifically, when the first information includes the second mapping table and the third mapping table, the second communication apparatus may establish, based on the second mapping table and the third mapping table, the correspondence between a remote electrical tilt device and a cell that are managed by the first communication apparatus. Alternatively, when the first information includes one of the second mapping table and the third mapping table, the second communication apparatus may establish, based on an item included in the first information and another preconfigured item, the correspondence between a remote electrical tilt device and a cell that are managed by the first communication apparatus.

In this application, the association relationship between the remote electrical tilt device and the cell that are managed by the first communication apparatus can be associated by using an intermediate parameter, namely, the frequency band.

In a possible implementation, the first information includes the second mapping table, and the generating first information includes: receiving second information from a third communication apparatus, where the second information is used for determining a correspondence between a frequency band and a serial number of a part or all of the at least one remote electrical tilt device; and determining the second mapping table based on the second information.

Specifically, in this application, information exchange between the first communication apparatus and the third communication apparatus is supported to obtain the second information used for determining the second mapping table, and the determined second mapping table is sent to the second communication apparatus. Correspondingly, the second communication apparatus establishes, based on the preconfigured third mapping table and the second mapping table that is sent by the first communication apparatus, the association relationship between the remote electrical tilt device and the cell that are managed by the first communication apparatus, to implement the accurate electrical tilting of the cell tilt, and avoid the adjustment error of the cell tilt. In addition, when the quantities of remote electrical tilt devices and cells that are managed by the first communication apparatus change, the foregoing solution can also help obtain the updated correspondence between a remote electrical tilt device and a cell.

In a possible implementation, the second information indicates the frequency band and the serial number of the part or all of the remote electrical tilt device; or the second information indicates the serial number of the part or all of the remote electrical tilt device.

In this way, the first communication apparatus may determine, based on the information, a correspondence between a frequency band and a remote electrical tilt device (or a serial number of the remote electrical tilt device) managed by the first communication apparatus.

In a possible implementation, the second information includes the serial number of the part or all of the remote electrical tilt device, and the determining the second mapping table based on the second information includes: determining the second mapping table based on the serial number of the part or all of the remote electrical tilt device and a preconfigured correspondence between a color ring number and a frequency band, where a serial number of one remote electrical tilt device corresponds to one color ring number, and one color ring number corresponds to one frequency band.

According to the foregoing technical solution, in this application, signaling overheads of the third communication apparatus can be reduced, and the third communication apparatus feeds back only the serial number of the remote electrical tilt device to the first communication apparatus.

In a possible implementation, the first information includes the third mapping table, and the generating first information includes: sending first request information to a terminal device, where the terminal device is located in an anchor cell in the at least two cells; receiving first feedback information from the terminal device, where the first feedback information is a response to the first request information, and the first feedback information includes a frequency band and a cell identity of each of the at least two cells; and determining the third mapping table based on the frequency band and the cell identity of each cell.

Specifically, in this application, information exchange between the first communication apparatus and the terminal device is supported to obtain information that is used for determining the third mapping table and that is about the frequency band and the cell identity of each cell, and the determined third mapping table is sent to the second communication apparatus. Correspondingly, the second communication apparatus establishes, based on the preconfigured second mapping table and the third mapping table that is sent by the first communication apparatus, the association relationship between the remote electrical tilt device and the cell that are managed by the first communication apparatus, to implement the accurate electrical tilting of the cell tilt, and avoid the adjustment error of the cell tilt. In addition, when the quantities of remote electrical tilt devices and cells that are managed by the first communication apparatus change, the foregoing solution can also help obtain the updated correspondence between a remote electrical tilt device and a cell.

In a possible implementation, the first information includes the first mapping table, and the generating first information includes: receiving third information from a third communication apparatus, where the third information is used for determining a correspondence between a frequency band and a serial number of a part or all of the at least one remote electrical tilt device; determining the second mapping table based on the third information; sending second request information to a terminal device, where the terminal device is located in an anchor cell in the at least two cells; receiving second feedback information from the terminal device, where the second feedback information is a response to the second request information, and the second feedback information includes a frequency band and a cell identity of each of the at least two cells; determining the third mapping table based on the frequency band and the cell identity of each cell; and determining the first mapping table based on the second mapping table and the third mapping table.

In a possible implementation, the third information indicates the frequency band and the serial number of the part or all of the remote electrical tilt device; or the third information indicates the serial number of the part or all of the remote electrical tilt device.

In a possible implementation, the third information includes the serial number of the part or all of the remote electrical tilt device, and the determining the second mapping table based on the second information includes: determining the second mapping table based on the serial number of the part or all of the remote electrical tilt device and a preconfigured correspondence between a color ring number and a frequency band, where a serial number of one remote electrical tilt device corresponds to one color ring number, and one color ring number corresponds to one frequency band.

In a possible implementation, the method further includes: receiving first indication information from the second communication apparatus, where the first indication information indicates to adjust a tilt of a first cell, and the first cell is any one of the at least two cells; determining, based on the first mapping table, a first remote electrical tilt device corresponding to the first cell; and adjusting the tilt of the first cell by using the first remote electrical tilt device.

In a possible implementation, the method further includes: receiving second indication information from the second communication apparatus, where the second indication information indicates the first communication apparatus to send the first information to the second communication apparatus.

According to a second aspect, a method for managing a remote electrical tilt device is provided. The method is applied to a second communication apparatus side, and the method includes: receiving first information from a first communication apparatus, where the first information is used for determining a first mapping table, and each mapping relationship in the first mapping table indicates a correspondence between one remote electrical tilt device and one or more cells; and generating the first mapping table based on the first information, where the first communication apparatus is configured to manage at least one remote electrical tilt device and at least two cells.

In a possible implementation, the first communication apparatus supports at least two frequency bands, and the first information includes at least one of the following: the first mapping table, a second mapping table, or a third mapping table. Each mapping relationship in the second mapping table indicates a correspondence between one remote electrical tilt device and one frequency band, each mapping relationship in the third mapping table indicates a correspondence between one cell and one frequency band, and the first mapping table is determined based on the second mapping table and the third mapping table.

In a possible implementation, the first information includes the second mapping table, and the generating the first mapping table based on the first information includes: generating the first mapping table based on the second mapping table and the preconfigured third mapping table.

In a possible implementation, the first information includes the third mapping table, and the generating the first mapping table based on the first information includes: generating the first mapping table based on the third mapping table and the preconfigured second mapping table.

In a possible implementation, the first information includes the second mapping table and the third mapping table, and the generating the first mapping table based on the first information includes: generating the first mapping table based on the third mapping table and the second mapping table.

In a possible implementation, the method further includes: sending first indication information to the first communication apparatus, where the first indication information indicates to adjust a tilt of a first cell, and the first cell is any one of the at least two cells.

In a possible implementation, the method further includes: sending second indication information to the first communication apparatus, where the second indication information indicates the first communication apparatus to send the first information to the second communication apparatus.

According to a third aspect, a method for managing a remote electrical tilt device is provided. The method is applied to a third communication apparatus side, and the method includes: generating second information, where the second information is used for determining a correspondence between a frequency band and a serial number of a part or all of at least one remote electrical tilt device; and sending the second information to a first communication apparatus.

In a possible implementation, the second information indicates the frequency band and the serial number of the part or all of the remote electrical tilt device; or the second information indicates the serial number of the part or all of the remote electrical tilt device.

In a possible implementation, the second information indicates the frequency band and the serial number of the part or all of the remote electrical tilt device, and the generating second information includes: sending first query information to an antenna apparatus, where the antenna apparatus includes the at least one remote electrical tilt device; receiving first response information from the antenna apparatus, where the first response information is a response to the first query information, and the first response information includes the frequency band and the serial number of the part or all of the remote electrical tilt device; and determining the second information based on the first response information.

In a possible implementation, the second information indicates the serial number of the part or all of the remote electrical tilt device, and the generating second information includes: sending second query information to an antenna apparatus, where the antenna apparatus includes the at least one remote electrical tilt device; receiving second response information from the antenna apparatus, where the second response information is a response to the second query information, and the second response information includes the serial number of the part or all of the remote electrical tilt device; and determining the second information based on the second response information.

It may be understood that, although the antenna apparatus feeds back the serial number of the remote electrical tilt device to the third communication apparatus, the third communication apparatus may establish the correspondence between a serial number of the remote electrical tilt device and a frequency band by using a preconfigured correspondence between a color ring number and a frequency band. This is because one color ring number corresponds to a serial number of one remote electrical tilt device, and one color ring number corresponds to one frequency band. Therefore, an association relationship may be established between the serial number of the remote electrical tilt device and the frequency band. Further, the third communication apparatus may determine a second mapping table.

Further, the third communication apparatus may send the correspondence between a serial number of the remote electrical tilt device and a frequency band to the first communication apparatus.

In a possible implementation, the method further includes: receiving indication information from the first communication apparatus, where the indication information indicates to send the second information.

According to a fourth aspect, a method for managing a remote electrical tilt device is provided. The method is applied to an antenna apparatus side, an antenna apparatus includes at least one remote electrical tilt device, and the method includes: receiving query information from a third communication apparatus; and sending second information to the third communication apparatus, where the second information is used for determining a correspondence between a frequency band and a serial number of a part or all of the at least one remote electrical tilt device, and the second information is response information for the query information.

In a possible implementation, the second information indicates the frequency band and the serial number of the part or all of the remote electrical tilt device; or the second information indicates the serial number of the part or all of the remote electrical tilt device.

According to a fifth aspect, a communication apparatus is provided. The communication apparatus may be used in the first communication apparatus in the first aspect. The communication apparatus may be a network device, an apparatus (for example, a chip, a chip system, or a circuit) in the network device, or an apparatus that can be used in combination with the network device.

In a possible implementation, the communication apparatus may include modules or units that are in one-to-one correspondence with the methods/operations/steps/actions described in the first aspect. The modules or units may be implemented by a hardware circuit, software, or a combination of a hardware circuit and software.

In a possible implementation, the communication apparatus includes: a processing unit, configured to generate first information, where the first information is used for determining a first mapping table, and each mapping relationship in the first mapping table indicates a correspondence between one remote electrical tilt device and one or more cells; and a transceiver unit, configured to send the first information to a second communication apparatus.

In a possible implementation, the first communication apparatus supports at least two frequency bands, and the first information includes at least one of the following: the first mapping table, a second mapping table, or a third mapping table. Each mapping relationship in the second mapping table indicates a correspondence between one remote electrical tilt device and one frequency band, each mapping relationship in the third mapping table indicates a correspondence between one cell and one frequency band, and the first mapping table is determined based on the second mapping table and the third mapping table.

In a possible implementation, the first information includes the second mapping table; the transceiver unit further receives second information from a third communication apparatus, where the second information is used for determining a correspondence between a frequency band and a serial number of a part or all of at least one remote electrical tilt; and the processing unit is further configured to determine the second mapping table based on the second information.

In a possible implementation, the second information indicates the frequency band and the serial number of the part or all of the remote electrical tilt device; or the second information indicates the serial number of the part or all of the remote electrical tilt device.

In a possible implementation, the second information includes the serial number of the part or all of the remote electrical tilt device; and the processing unit is further configured to determine the second mapping table based on the serial number of the part or all of the remote electrical tilt device and a preconfigured correspondence between a color ring number and a frequency band, where a serial number of one remote electrical tilt device corresponds to one color ring number, and one color ring number corresponds to one frequency band.

In a possible implementation, the first information includes the third mapping table; the transceiver unit is further configured to send first request information to a terminal device, where the terminal device is located in an anchor cell in at least two cells; the transceiver unit is further configured to receive first feedback information from the terminal device, where the first feedback information is a response to the first request information, and the first feedback information includes a frequency band and a cell identity of each of the at least two cells; and the processing unit is further configured to determine the third mapping table based on the frequency band and the cell identity of each cell.

In a possible implementation, the first information includes the first mapping table; the transceiver unit is further configured to receive third information from a third communication apparatus, where the third information is used for determining a correspondence between a frequency band and a serial number of a part or all of at least one remote electrical tilt device; the processing unit is further configured to determine the second mapping table based on the third information; the transceiver unit is further configured to: send second request information to a terminal device, where the terminal device is located in an anchor cell in the at least two cells; and receive second feedback information from the terminal device, where the second feedback information is a response to the second request information, and the second feedback information includes a frequency band and a cell identity of each of the at least two cells; the processing unit is further configured to determine the third mapping table based on the frequency band and the cell identity of each cell; and the processing unit is further configured to determine the first mapping table based on the second mapping table and the third mapping table.

In a possible implementation, the third information indicates the frequency band and the serial number of the part or all of the remote electrical tilt device; or the third information indicates the serial number of the part or all of the remote electrical tilt device.

In a possible implementation, the third information includes the serial number of the part or all of the remote electrical tilt device; and the processing unit is further configured to determine the second mapping table based on the serial number of the part or all of the remote electrical tilt device and a preconfigured correspondence between a color ring number and a frequency band, where a serial number of one remote electrical tilt device corresponds to one color ring number, and one color ring number corresponds to one frequency band.

In a possible implementation, the transceiver unit is further configured to receive first indication information from the second communication apparatus, where the first indication information indicates to adjust a tilt of a first cell, and the first cell is any one of the at least two cells; the processing unit is further configured to determine, based on the first mapping table, a first remote electrical tilt device corresponding to the first cell; and the processing unit is further configured to adjust the tilt of the first cell by using the first remote electrical tilt device.

In a possible implementation, the transceiver unit is further configured to receive second indication information from the second communication apparatus, where the second indication information indicates the first communication apparatus to send the first information to the second communication apparatus.

According to a fifth aspect, a communication apparatus is provided. The communication apparatus may be used in the second communication apparatus in the second aspect. The communication apparatus may be a network device, an apparatus (for example, a chip, a chip system, or a circuit) in the network device, or an apparatus that can be used in combination with the network device.

In a possible implementation, the communication apparatus may include modules or units that are in one-to-one correspondence with the methods/operations/steps/actions described in the second aspect. The modules or units may be implemented by a hardware circuit, software, or a combination of a hardware circuit and software.

In a possible implementation, the communication apparatus includes: a transceiver unit, configured to receive first information from a first communication apparatus, where the first information is used for determining a first mapping table, and each mapping relationship in the first mapping table indicates a correspondence between one remote electrical tilt device and one or more cells; and a processing unit, configured to generate the first mapping table based on the first information, where the first communication apparatus is configured to manage at least one remote electrical tilt device and at least two cells.

In a possible implementation, the first communication apparatus supports at least two frequency bands, and the first information includes at least one of the following: the first mapping table, a second mapping table, or a third mapping table. Each mapping relationship in the second mapping table indicates a correspondence between one remote electrical tilt device and one frequency band, each mapping relationship in the third mapping table indicates a correspondence between one cell and one frequency band, and the first mapping table is determined based on the second mapping table and the third mapping table.

In a possible implementation, the first information includes the second mapping table, and the processing unit is further configured to generate the first mapping table based on the second mapping table and the preconfigured third mapping table.

In a possible implementation, the first information includes the third mapping table, and the processing unit is further configured to generate the first mapping table based on the third mapping table and a preconfigured second mapping table.

In a possible implementation, the first information includes the second mapping table and the third mapping table, and the processing unit is further configured to generate the first mapping table based on the third mapping table and the second mapping table.

In a possible implementation, the transceiver unit is further configured to send first indication information to the first communication apparatus, where the first indication information indicates to adjust a tilt of a first cell, and the first cell is any one of the at least two cells.

In a possible implementation, the transceiver unit is further configured to send second indication information to the first communication apparatus, where the second indication information indicates the first communication apparatus to send the first information to the second communication apparatus.

According to a sixth aspect, a communication apparatus is provided. The communication apparatus may be used in the third communication apparatus in the third aspect. The communication apparatus may be a network device, an apparatus (for example, a chip, a chip system, or a circuit) in the network device, or an apparatus that can be used in combination with the network device.

In a possible implementation, the communication apparatus may include modules or units that are in one-to-one correspondence with the methods/operations/steps/actions described in the third aspect. The modules or units may be implemented by a hardware circuit, software, or a combination of a hardware circuit and software.

In a possible implementation, the communication apparatus includes: a processing unit, configured to generate second information, where the second information is used for determining a correspondence between a frequency band and a serial number of a part or all of at least one remote electrical tilt device managed by a first communication apparatus; and a transceiver unit, configured to send the second information to the first communication apparatus.

In a possible implementation, the second information indicates the frequency band and the serial number of the part or all of the remote electrical tilt device; or the second information indicates the serial number of the part or all of the remote electrical tilt device.

In a possible implementation, the second information indicates the frequency band and the serial number of the part or all of the remote electrical tilt device; the transceiver unit is further configured to send first query information to an antenna apparatus, where the antenna apparatus includes the at least one remote electrical tilt device; the transceiver unit is further configured to receive first response information from the antenna apparatus, where the first response information is a response to the first query information, and the first response information includes the frequency band and the serial number of the part or all of the remote electrical tilt device; and the processing unit is further configured to determine the second information based on the first response information.

In a possible implementation, the second information indicates the serial number of the part or all of a remote electrical tilt antenna apparatus. The transceiver unit is further configured to send second query information to an antenna apparatus, where the antenna apparatus includes the at least one remote electrical tilt device; the transceiver unit is further configured to receive second response information from the antenna apparatus, where the second response information is a response to the second query information, and the second response information includes the serial number of the part or all of the remote electrical tilt device; and the processing unit is further configured to determine the second information based on the second response information.

In a possible implementation, the transceiver unit is further configured to receive indication information from the first communication apparatus, where the indication information indicates to send the second information.

According to a seventh aspect, a communication apparatus is provided. The communication apparatus may be used in the antenna apparatus in the fourth aspect. The communication apparatus may include modules or units that are in one-to-one correspondence with the methods/operations/steps/actions described in the fourth aspect. The modules or units may be implemented by a hardware circuit, software, or a combination of a hardware circuit and software.

In a possible implementation, the communication apparatus includes: a transceiver unit, configured to receive query information from a third communication apparatus; and the transceiver unit is further configured to send second information to the third communication apparatus, where the second information is used for determining a correspondence between a frequency band and a serial number of a part or all of at least one remote electrical tilt device, and the second information is a response to the query information.

In a possible implementation, the second information indicates the frequency band and the serial number of the part or all of the remote electrical tilt device; or the second information indicates the serial number of the part or all of the remote electrical tilt device.

According to an eighth aspect, a communication apparatus is provided, including a processor. The processor is configured to enable, by executing a computer program or instructions or by using a logic circuit, the communication apparatus to perform the method according to any one of the first aspect and the possible implementations of the first aspect, the communication apparatus to perform the method according to any one of the second aspect and the possible implementations of the second aspect, the communication apparatus to perform the method according to any one of the third aspect and the possible implementations of the third aspect, or the communication apparatus to perform the method according to any one of the fourth aspect and the possible implementations of the fourth aspect.

In a possible implementation, the apparatus further includes a memory, and the memory is configured to store the computer program or the instructions.

Optionally, the processor and the memory are integrated together, or the processor and the memory are separately disposed.

In another possible implementation, the memory is located outside the communication apparatus.

In a possible implementation, the communication apparatus further includes a communication interface, and the communication interface is configured to input and/or output a signal.

For example, the communication interface may be a transceiver, a circuit, a bus, a module, or another type of communication interface.

According to a ninth aspect, a communication apparatus is provided, including a logic circuit and an input/output interface. The input/output interface is configured to output and/or input a signal. The logic circuit is configured to: perform the method according to any one of the first aspect and the possible implementations of the first aspect, perform the method according to any one of the second aspect and the possible implementations of the second aspect, perform the method according to any one of the third aspect and the possible implementations of the third aspect, or perform the method according to any one of the fourth aspect and the possible implementations of the fourth aspect.

According to a tenth aspect, a computer-readable storage medium is provided, including a computer program or instructions. When the computer program or the instructions are run on a computer, the computer is enabled to perform the method according to any one of the first aspect and the possible implementations of the first aspect, the computer is enabled to perform the method according to any one of the second aspect and the possible implementations of the second aspect, the computer is enabled to perform the method according to any one of the third aspect and the possible implementations of the third aspect, or the computer is enabled to perform the method according to any one of the fourth aspect and the possible implementations of the fourth aspect.

According to an eleventh aspect, a computer program product is provided, including instructions. When the instructions are run on a computer, the computer is enabled to perform the method according to any one of the first aspect and the possible implementations of the first aspect, the computer is enabled to perform the method according to any one of the second aspect and the possible implementations of the second aspect, the computer is enabled to perform the method according to any one of the third aspect and the possible implementations of the third aspect, or the computer is enabled to perform the method according to any one of the fourth aspect and the possible implementations of the fourth aspect.

According to a twelfth aspect, a communication system is provided, including a first communication apparatus and a second communication apparatus. The first communication apparatus is configured to generate first information, where the first information is used for determining a first mapping table, and each mapping relationship in the first mapping table indicates a correspondence between one remote electrical tilt device and one or more cells. The first communication apparatus is further configured to send the first information to the second communication apparatus. The second communication apparatus is configured to receive the first information from the first communication apparatus. A second antenna apparatus is further configured to generate the first mapping table based on the first information. The first communication apparatus is configured to manage at least one remote electrical tilt device and at least two cells.

In a possible implementation, the first communication apparatus is further configured to perform the method according to any one of the possible implementations of the first aspect.

In a possible implementation, the second communication apparatus is further configured to perform the method according to any one of the second aspect and the possible implementations of the second aspect.

In a possible implementation, the communication system further includes a third communication apparatus, and the third communication apparatus is configured to perform the method according to any one of the third aspect and the possible implementations of the third aspect.

In a possible implementation, the communication system further includes an antenna apparatus, where the antenna apparatus includes the at least one remote electrical tilt device; and the antenna apparatus is configured to perform the method according to any one of the fourth aspect and the possible implementations of the fourth aspect.

For descriptions of beneficial effects of the second aspect to the twelfth aspect, refer to descriptions of beneficial effects of the first aspect. Details are not described herein again.

### BRIEF DESCRIPTION OF DRAWINGS

FIG. 1 is a diagram of an application scenario 100 according to an embodiment of this application;
FIG. 2 is a diagram of a communication system 200 to which an embodiment of this application is applicable;
FIG. 3 is a schematic interaction flowchart of a method 300 for managing a remote electrical tilt device according to an embodiment of this application;
FIG. 4 is a schematic interaction flowchart of a method 400 for managing a remote electrical tilt device according to an embodiment of this application;
FIG. 5 is a schematic interaction flowchart of a method 500 for managing a remote electrical tilt device according to an embodiment of this application;
FIG. 6 is an application diagram of a method for managing a remote electrical tilt device according to an embodiment of this application;
FIG. 7 is a block diagram of a structure of a communication apparatus 700 according to an embodiment of this application;
FIG. 8 is a block diagram of a structure of a communication apparatus 800 according to an embodiment of this application;
FIG. 9 is a block diagram of a structure of a communication apparatus 900 according to an embodiment of this application;
FIG. 10 is a block diagram of a structure of a communication apparatus 1000 according to an embodiment of this application; and
FIG. 11 is a block diagram of a structure of a communication apparatus 1100 according to an embodiment of this application; and

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a 5th generation (5th generation, 5G) system or new radio (new radio, NR), a system evolved after 5G like a 6th generation (6th generation, 6G) system, and a non-terrestrial network (non-terrestrial network, NTN) system like inter-satellite communication and satellite communication. A satellite communication system includes a satellite base station and a terminal device. The satellite base station provides a communication service for the terminal device. The satellite base station may also communicate with a terrestrial base station. A satellite may serve as a base station, or may serve as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network scenario, and no limitation is imposed on a transmission point. For example, coordinated multipoint transmission may be performed between macro base stations, between micro base stations, and between a macro base station and a micro base station. The technical solutions in embodiments of this application are applicable to both the FDD system and the TDD system. The technical solutions in embodiments of this application are applicable to not only a low-frequency scenario (sub 6G), but also a highfrequency scenario (above 6 GHz), terahertz, optical communication, and the like. The technical solutions in embodiments of this application are applicable to not only communication between a network device and a terminal, but also communication between network devices, communication between terminals, communication in an internet of vehicles, communication in an internet of things, communication in an industrial internet, and the like.

The technical solutions in embodiments of this application may also be applied to a scenario in which the terminal is connected to a single base station. The base station connected to the terminal and a core network (core network, CN) connected to the base station are of a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in embodiments of this application are also applicable to a dual connectivity (dual connectivity, DC) scenario in which the terminal is connected to at least two base stations.

The technical solutions in embodiments of this application also use a macro-micro scenario including different forms of base stations in a communication network. For example, the base station may be a satellite, an air balloon station, an uncrewed aerial vehicle station, or the like. The technical solutions in embodiments of this application are also applicable to a scenario in which both a wide-coverage base station and a small-coverage base station exist.

The technical solutions in embodiments of this application may be applied to a scenario in which there is a high-reliability service requirement, for example, a port, industrial manufacturing, transportation, a coal mine, and other scenarios.

It may be further understood that, the technical solutions in embodiments of this application may be further applied to 5.5G, 6G, and later wireless communication systems. Application scenarios include but are not limited to a terrestrial cellular communication scenario, an NTN scenario, a satellite communication scenario, a high-altitude communication platform (high altitude platform station, HAPS) communication scenario, a vehicle-to-everything (vehicle-to-everything, V2X) scenario, an integrated access and backhaul (integrated access and backhaul, IAB) scenario, a reconfigurable intelligent surface (reconfigurable intelligent surface, RIS) communication scenario, and the like.

The terminal in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

In embodiments of this application, a communication apparatus configured to implement a function of the terminal device may be a terminal device, or may be an apparatus that can support the terminal device in implementing the function, for example, a chip system. The apparatus may be installed in the terminal device or used in combination with the terminal device. In embodiments of this application, the chip system may include a chip, or may include the chip and another discrete component.

The network device in embodiments of this application is a device having a wireless transceiver function, and can be configured to communicate with the terminal device. An access network device may be a node in a radio access network (radio access network, RAN), and may be referred to as a base station, or may be referred to as a RAN node. The access network device may be an evolved NodeB (evolved NodeB, eNB, or eNodeB) in LTE, a base station in a 5G network such as a gNodeB (gNB), a base station in a public land mobile network (public land mobile network, PLMN) evolved after 5G, a broadband network gateway (broadband network gateway, BNG), an aggregation switch, a 3rd generation partnership project (3rd generation partnership project, 3GPP) access device, or the like. For example, the RAN may be configured as a RAN defined in a 3GPP protocol, an open radio access network (open radio access network, O-RAN), a cloud access network (cloud radio access network, C-RAN), or the like.

The network device in embodiments of this application may further include various forms of base stations, for example, a macro base station, a micro base station (also referred to as a small cell), a relay station, a transmission point (transmitting and receiving point, TRP), a transmitting point (transmitting point, TP), a mobile switching center, a device that undertakes a base station function in device-to-device (device-to-device, D2D), vehicle-to-everything (vehicle-to-everything, V2X), and machine-to-machine (machine-to-machine, M2M) communication, and a network device in an NTN communication system. This is not specifically limited in embodiments of this application.

The network device in embodiments of this application may further include a network element or a module that implements some functions of the base station, for example, include one or more of the following: a central unit (central unit, CU), a distributed unit (distributed unit, DU), or a radio unit (radio unit, RU). Optionally, the CU may be further separated into a CU-control plane (control plane, CP) and a CU-user plane (user plane, UP). A function of the CU and a function of the DU may be implemented by different network elements, or may be both implemented by a baseband unit (baseband unit, BBU) of the base station. A function of the RU may be implemented by a radio frequency device of the base station. For example, the radio frequency device of the base station may be a radio remote unit (remote radio unit, RRU), a remote radio head (remote radio head, RRH), a pico remote radio unit (pico remote radio unit, pRRU), an active antenna unit (active antenna unit, AAU), another unit, module, or device having a radio frequency processing function, or the like. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited. Optionally, the fronthaul interface protocol between the DU and the RU in the O-RAN system may be further considered as a special example of the eCPRI interface protocol.

In embodiments of this application, an apparatus configured to implement a function of the network device may be a network device, or may be an apparatus that can support the network device in implementing the function, for example, a chip system. The apparatus may be installed in the network device or used in combination with the network device. In embodiments of this application, the chip system may include a chip, or may include the chip and another discrete component.

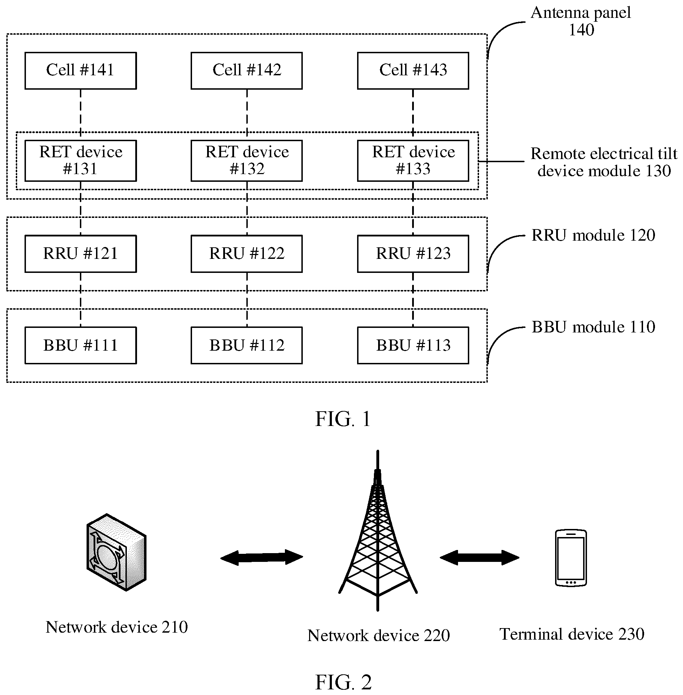

FIG. 1 is a diagram of an application scenario 100 according to an embodiment of this application. As shown in FIG. 1, the application scenario 100 includes a BBU module 110, an RRU module 120, a remote electrical tilt device (remote electrical tilt, RET) module 130, and an antenna panel 140. The BBU module 110 includes at least one BBU, for example, a BBU #111, a BBU #112, and a BBU #113. The RRU module 120 includes at least one RRU, for example, an RRU #121, an RRU #122, and an RRU #123. The remote electrical tilt device module 130 includes at least two remote electrical tilt devices, for example, a RET device #131, a RET device #132, and a RET device #133. The antenna panel 140 includes at least two cells (or a coverage area of the antenna panel 140 may be divided into at least two cells, or the antenna panel 140 is configured to perform data transmission in at least two cells), for example, a cell #141, a cell #142, and a cell #143. The remote electrical tilt device module 130 is configured to control a tilt of the antenna panel 140. In other words, the remote electrical tilt device module 130 is configured to control a tilt of each cell corresponding to an antenna module 140, to affect a coverage area of each cell. In addition, the remote electrical tilt device module 130 may be built in (as shown in FIG. 1) or may be disposed externally and connected to the antenna panel 140. This is not limited. The following uses an example in which the remote electrical tilt device module 130 is built in the antenna panel 140 for description.

Optionally, in a method provided in this application, the BBU may alternatively be replaced with a DU for description, and the RRU may alternatively be replaced with an AAU, a pRRU, an RRH, or another radio frequency module.

In addition, each BBU in the BBU module 110 may separately support communication networks of different standards. For example, the BBU #111 supports LTE, the BBU #112 supports NR, and the BBU #113 supports FDD.

Specifically, a network device (for example, a base station) includes a BBU module 110 and an RRU module 120, and an antenna apparatus includes a remote electrical tilt device module 130 and an antenna panel 140. Optionally, the network device (for example, the base station) may also include the remote electrical tilt device module 130 and the antenna panel 140. This is not limited in this application.

In the application scenario 100, the BBU, the RRU, the RET device, and the cell are associated with each other (such an association relationship may be already learned of or may not be already learned of, which is not limited herein). For example, the BBU #111 corresponds to the RRU #121, the RRU #121 corresponds to the RET device #131, and the RET device #131 corresponds to the cell #141; the BBU #112 corresponds to the RRU #122, the RRU #122 corresponds to the RET device #132, and the RET device #132 corresponds to the cell #142; and the BBU #113 corresponds to the RRU #123, the RRU #123 corresponds to the RET device #133, and the RET device #133 corresponds to the cell #143.

It should be understood that the association relationship between the BBU, the RRU, the RET device, and the cell shown in the application scenario 110 is a logical association relationship (the logical relationship is indicated by using dashed lines), and is not an actual physical connection relationship.

Specifically, the RRU module 120 may be connected to the antenna panel 140 through a radio frequency feeder, so that signal receiving and sending can be implemented. For example, the antenna panel 140 includes an antenna interface standards group (antenna interface standards group, AISG) interface, and an anchor RRU (for example, the anchor RRU is the RRU #122) of the RRU module 120 can establish a connection relationship with the remote electrical tilt device module 130 through the AISG interface of the antenna panel 140, to control the tilt of each cell of the antenna panel 140 by using the remote electrical tilt device module 130. There is no connection relationship between an RRU other than the anchor RRU in the RRU module 120 and the remote electrical tilt device module 130. In other words, a user can control all RET devices in the remote electrical tilt device module 130 only by using the anchor RRU in the RRU module 120. Optionally, an RRU module 10 may include one or more anchor RRUs. One anchor RRU may be connected to one or more RET devices, and one RET device is connected to one anchor RRU.

However, when an association relationship between the anchor RRU, the RET device, and the cell in the application scenario 100 is not already learned of, it is difficult for the user to adjust a tilt of a target cell. For example, if the user wants to adjust a tilt of a cell A but can determine neither a RET device corresponding to the cell A, nor an anchor RRU corresponding to the cell A, the user cannot adjust the tilt of the cell A.

In a possible implementation, a carrier manages a RET device of a multi-band antenna mainly through a manual means. For example, during engineering construction, a mapping table between a RET device, a cell, and an anchor RRU is maintained offline. When a tilt of a target cell needs to be adjusted, a corresponding RET device and anchor RRU can be determined by querying the mapping table, to adjust the tilt of the target cell. However, the foregoing manner of managing the RET device of the multi-band antenna has a restricted use scope, and also causes a problem of an adjustment error. For example, the user may not find the RET device corresponding to the target cell, and therefore cannot adjust the tilt of the target cell; or the user may find an incorrect RET device, and therefore, the tilt of the target cell is incorrectly adjusted. Consequently, network performance may be affected.

In view of the foregoing technical problem, this application provides a method for managing a remote electrical tilt device and a communication apparatus, to enhance accuracy of performing electrical tilting on a cell tilt.

The following describes the method for managing the remote electrical tilt device and the communication apparatus in embodiments of this application with reference to the accompanying drawings.

FIG. 2 is a diagram of a communication system 200 to which an embodiment of this application is applicable. As shown in FIG. 2, the communication system 200 includes a network device 210, a network device 220, and a terminal device 230. Quantities of terminal devices and network devices included in the communication system 200 are not limited in this application. It should be understood that FIG. 2 is merely an example for understanding, and cannot limit the protection scope of this application. The terminal device 230 may be any terminal device listed above, and the network device 210 and the network device 220 may also be any network device listed above.

Specifically, the network device 210 is a management device of the network device 220. For example, the network device 220 is a base station, and in this case, the network device 210 may be an operation and maintenance center (operation and maintenance center, OMC), and is configured to take responsibility for managing the base station. Alternatively, the network device 210 may be a common network management device (or system), or may be a network management device (or system) provided by a carrier or a third party. This is not limited in this application.

Specifically, the network device 220 can manage at least one remote electrical tilt and at least two cells. The terminal device 230 is located in an anchor cell in the at least two cells managed by the network device 220. The anchor cell is a cell corresponding to an anchor RRU.

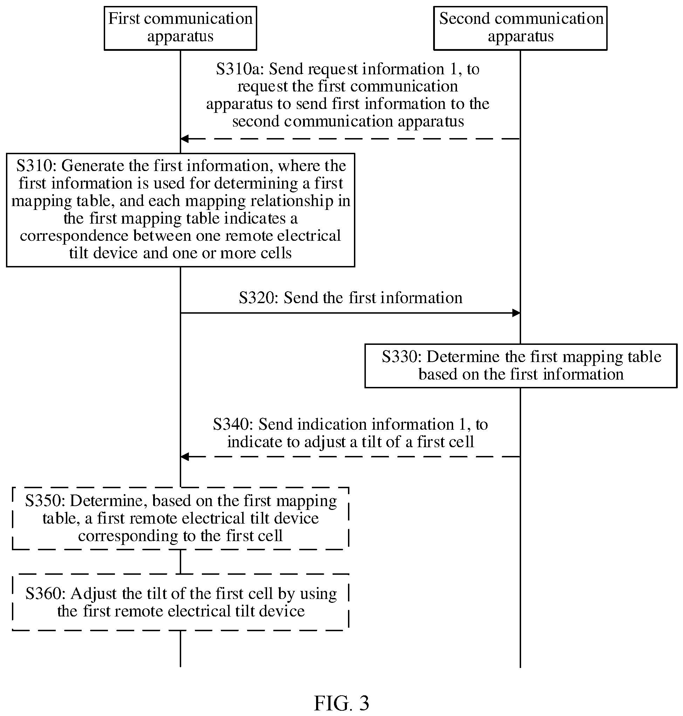

FIG. 3 is a schematic interaction flowchart of a method 300 for managing a remote electrical tilt device according to an embodiment of this application. A method procedure in FIG. 3 may be performed by a first communication apparatus and a second communication apparatus, or may be performed by a module and/or a component (for example, a chip or an integrated circuit) that can be installed in or connected to the first communication apparatus and the second communication apparatus and that have/has a corresponding function. This is not limited in this embodiment of this application. The first communication apparatus may be a network device, and the second communication apparatus may be a network device. The following uses the first communication apparatus and the second communication apparatus as an example for description. As shown in FIG. 3, the method 300 includes the following steps.

S310: The first communication apparatus obtains (for example, generates) first information, where the first information is used for determining a first mapping table, and each mapping relationship in the first mapping table indicates a correspondence between one remote electrical tilt device and one or more cells.

Specifically, that each mapping relationship in the first mapping table indicates a correspondence between one remote electrical tilt device and one or more cells may be that each mapping relationship indicates a correspondence between an identity of the one remote electrical tilt device and an identity of the one or more cells. In a possible implementation, the identity of the remote electrical tilt device is a serial number of the remote electrical tilt device, the identity of the cell is a cell identity, and a serial number of one remote electrical tilt device corresponds to a cell identity of one or more cells. Therefore, each mapping relationship in the first mapping table may indicate a correspondence between a serial number of one remote electrical tilt device and a cell identity of one or more cells. In this manner, the remote electrical tilt device may be associated with the cell. For ease of description, the following mainly uses a correspondence between a remote electrical tilt device and a cell as an example for description, but does not limit a description of a correspondence between a serial number of a remote electrical tilt device and an identity of a cell.

S320: The first communication apparatus sends the first information to the second communication apparatus.

Correspondingly, the second communication apparatus receives the first information from the first communication apparatus.

Specifically, in step S310, a possible form of the first mapping table is a table. Each row or each column in a table form of the first mapping table represents one mapping relationship, and one mapping relationship indicates the correspondence between one remote electrical tilt device and one or more cells. For example, the one mapping relationship indicates the correspondence between an identity (for example, a serial number) of one remote electrical tilt device and an identity (for example, a cell identity) of one or more cells. For descriptions of the table form of the first mapping table, refer to Table 1.

**Table 1**

| Remote electrical tilt device | Cell |
|---|---|
| RET device #1 | Cell #1 |
| RET device #2 | Cell #2 |
| ... | ... |
| RET device #N | Cell #n |

As shown in Table 1, each row in Table 1 represents one mapping relationship, and the one mapping relationship is associated with one remote electrical tilt device and one cell. For example, the RET device #1 corresponds to the cell #1, the RET device #2 corresponds to the cell #2, ..., and the RET device #N corresponds to the cell #n. The one remote electrical tilt device may further correspond to a plurality of cells, and the one cell may also correspond to a plurality of remote electrical tilt devices. This is not limited herein. For a form in which the one remote electrical tilt device corresponds to the plurality of cells, refer to descriptions in Table 1. For a form in which the one cell corresponds to the plurality of remote electrical tilt devices, refer to the descriptions in Table 1. Details are not described herein again. For ease of description, an example in which the one remote electrical tilt device corresponds to the one cell is used for description in this embodiment of this application. However, a scenario in which the one remote electrical tilt device corresponds to the plurality of cells and a scenario in which the one cell corresponds to the plurality of remote electrical tilt devices are not limited.

It may be understood that when the one remote electrical tilt device corresponds to the one cell, this application supports controlling a tilt of the one cell by using the one remote electrical tilt device; when the one remote electrical tilt device corresponds to the plurality of cells, this application supports controlling tilts of the plurality of corresponding cells by using the one remote electrical tilt device; and when the one cell corresponds to the plurality of remote electrical tilt devices, this application supports controlling the tilt of the cell by using the plurality of corresponding remote electrical tilt devices.

In a possible implementation, a possible form of the first mapping table is an index group. Each index in the index group represents one mapping relationship. For example, an index {a} represents [cell #1, RET device #1].

In a possible implementation, a possible form of the first mapping table is a mapping set. Each mapping element in the mapping set represents one mapping relationship pair, for example, {cell #1, RET device #1}, {cell #2, RET device #2}, ..., and {cell #n, RET device #n}.

In conclusion, a specific construction form of the first mapping table is not limited in this application, provided that the first mapping table can indicate a correspondence between a remote electrical tilt device and a cell that are managed by the first communication apparatus.

In step S310, that the first information is used for determining a first mapping table may be that the first information includes the first mapping table; or the first information includes a related parameter used for generating the first mapping table. For example, the related parameter includes at least one of a second mapping table and a third mapping table. For specific descriptions, refer to the following.

In a possible implementation, the first information includes at least one of the following:
the first mapping table, the second mapping table, or the third mapping table.

Specifically, each mapping relationship in the second mapping table indicates a correspondence between one remote electrical tilt device and one frequency band. Each mapping relationship in the third mapping table indicates a correspondence between one cell and one frequency band. The first mapping table is determined based on the second mapping table and the third mapping table.

Specifically, that each mapping relationship in the second mapping table indicates a correspondence between one remote electrical tilt device and one frequency band may be that each mapping relationship indicates a correspondence between a serial number of the one remote electrical tilt device and the one frequency band. Therefore, each mapping relationship in the second mapping table may indicate a correspondence between a serial number of one remote electrical tilt device and one frequency band. Similarly, that each mapping relationship in the third mapping table indicates a correspondence between one cell and one frequency band may be that each mapping relationship indicates a correspondence between a cell identity of the one cell and the one frequency band. Therefore, each mapping relationship in the third mapping table may indicate a correspondence between a cell identity of one cell and one frequency band. For ease of description, the following mainly uses a correspondence between a remote electrical tilt device and a frequency band, a correspondence between a cell and a frequency band, and a correspondence between a dynamic device and a cell as an example for description. Unified descriptions are provided herein, and details are not described below.

For descriptions of the second mapping table, refer to Table 2. For descriptions of the third mapping table, refer to Table 3.

**Table 2**

| Remote electrical tilt device | Frequency band |
|---|---|
| RET device #1 | Frequency band #1 |
| RET device #2 | Frequency band #2 |
| ... | ... |
| RET device #N | Frequency band #n |

As shown in Table 2, each row in Table 2 represents one mapping relationship, and the one mapping relationship is associated with one remote electrical tilt device and one frequency band. For example, the RET device #1 corresponds to the frequency band #1, the RET device #2 corresponds to the frequency band #2, ..., and the RET device #N corresponds to the frequency band #n. The one frequency band may further correspond to a plurality of remote electrical tilt devices. This is not limited herein.

**Table 3**

| Cell | Frequency band |
|---|---|
| Cell #1 | Frequency band #1 |
| Cell #2 | Frequency band #2 |
| ... | ... |
| Cell #N | Frequency band #n |

As shown in Table 3, each row in Table 3 represents one mapping relationship, and the one mapping relationship is associated with one cell and one frequency band. For example, the cell #1 corresponds to the frequency band #1, the cell #2 corresponds to the frequency band #2, ..., and the cell #N corresponds to the frequency band #n.

It should be noted that for specific construction forms of the second mapping table and the third mapping table, refer to descriptions of the specific construction form of the first mapping table. Details are not described herein again.

S330: The second communication apparatus determines the first mapping table based on the first information.

Specifically, when the first information includes the first mapping table, the second communication apparatus determines, based on the first mapping table included in the first information, the correspondence between a remote electrical tilt device and a cell that are managed by the first communication apparatus. When the first information includes at least one of the second mapping table and the third mapping table, the second communication apparatus determines the first mapping table based on the at least one of the second mapping table and the third mapping table, and another preconfigured item, to determine the correspondence between a remote electrical tilt device and a cell that are managed by the first communication apparatus.

In Example #1, when the first information includes the second mapping table, the third mapping table is preconfigured in the second communication apparatus. Correspondingly, the second communication apparatus generates the first mapping table based on the second mapping table included in the first information and the preconfigured third mapping table. In Example #2, when the first information includes the third mapping table, the second mapping table is preconfigured in the second communication apparatus. Correspondingly, the second communication apparatus generates the first mapping table based on the third mapping table included in the first information and the preconfigured second mapping table. In Example #3, when the first information includes the second mapping table and the third mapping table, the second communication apparatus generates the first mapping table based on the second mapping table and the third mapping table that are included in the first information.

It may be understood that each mapping relationship in the second mapping table indicates the correspondence between a remote electrical tilt device and a frequency band, and each mapping relationship in the third mapping table indicates the correspondence between a cell and a frequency band. The second communication apparatus associates the correspondence between a remote electrical tilt device and a cell by using an intermediate parameter, namely, the frequency band, to generate the first mapping table. For example, if the second mapping table indicates that the RET device #1 corresponds to the frequency band #1, and the third mapping table indicates that the cell #1 corresponds to the frequency band #1, it may be determined that the RET device #1 corresponds to the cell #1.

The first communication apparatus generates the first information used for determining the first mapping table. In this application, the correspondence between a remote electrical tilt device and a cell that are managed by the first communication apparatus can be obtained in an automatic manner, so that a manual operation of a user is omitted, and user experience can be improved. In addition, when quantities of remote electrical tilt devices and cells that are managed by the first communication apparatus change, the foregoing solution can also help obtain an updated correspondence between a remote electrical tilt device and a cell.

According to the foregoing solution, in this application, centralized remote electrical tilt management is supported in a "what you see is what you get" manner. For example, when electrical tilting is performed on the tilt of the cell, an association relationship between the remote electrical tilt device and the cell may be directly displayed. For example, when an administrator wants to adjust a tilt of a cell, the administrator may set a tilt adjustment command of the cell. The first communication apparatus or the second communication apparatus may find, by using the first mapping table, a remote electrical tilt device corresponding to the cell, so that the tilt of the corresponding cell may be adjusted by using the remote electrical tilt device.

In addition, in this application, accuracy of performing electrical tilting on the cell tilt can be enhanced by using the foregoing solution, and an adjustment error can be avoided.

In a possible implementation, the method 300 may further include the following steps.

S340: The second communication apparatus sends indication information 1 to the first communication apparatus, where the indication information 1 indicates to adjust a tilt of a first cell.

Correspondingly, the first communication apparatus receives the indication information 1 from the second communication apparatus, and adjusts the tilt of the first cell based on the indication information 1.

S350: The first communication apparatus determines, based on the first mapping table, a first remote electrical tilt device corresponding to the first cell.

S360: The first communication apparatus adjusts the tilt of the first cell by using the first remote electrical tilt device.

Specifically, the second communication apparatus can determine the first mapping table based on the first information. When the second communication apparatus wants to adjust the tilt of the first cell, the second communication apparatus obtains, by using the first mapping table, the first remote electrical tilt device corresponding to the first cell, and then sends, to the first communication apparatus, the indication information 1 for adjusting the tilt of the first cell. The indication information 1 may include related information of the first remote electrical tilt device, for example, a serial number of the first remote electrical tilt device. Correspondingly, the first communication apparatus adjusts, by using the first remote electrical tilt device, the tilt of the first cell based on the indication information 1.

In a possible implementation, the indication information 1 includes a tilt adjustment amount of the first cell and a cell identity of the first cell. The first communication apparatus determines, based on the first mapping table and the cell identity of the first cell, the first remote electrical tilt device corresponding to the first cell, and adjusts, by using the first remote electrical tilt device, the tilt of the first cell based on the tilt adjustment amount indicated by the second communication apparatus.

In this way, this application supports flexible adjustment of the tilt of the cell managed by the first communication apparatus, and can ensure accuracy and convenience of adjusting the tilt of the cell.

In a possible implementation, the method 300 may further include the following steps.

S310a: The second communication apparatus sends request information 1 to the first communication apparatus, where the request information 1 is used for requesting the first communication apparatus to send the first information to the second communication apparatus.

Correspondingly, the first communication apparatus receives the request information 1 from the second communication apparatus, and determines, based on the request information 1, to send the first information to the second communication apparatus.

Optionally, the first communication apparatus may periodically send the first information to the second communication apparatus. In this way, the second communication apparatus may obtain a latest correspondence between a remote electrical tilt device and a cell that are managed by the first communication apparatus at any time.

It should be understood that the sending in step S301a is before step S310. In other words, the first communication apparatus sends the first information to the second communication apparatus in response to the request information 1.

It should be noted that quantities of at least one remote electrical tilt device and at least two cells that are managed by the first communication apparatus may be already learned of, or may not be already learned of. When the first communication apparatus does not determine the quantities of remote electrical tilt devices and cells that are managed by the first communication apparatus, the first communication apparatus may query each remote electrical tilt device and cell, to determine a remote electrical tilt and a cell that are associated with the first communication apparatus. Correspondingly, the first communication apparatus determines, by using the method 300, the correspondence between a remote electrical tilt device and a cell that are managed by the first communication apparatus. Further, the first communication apparatus may send, to the second communication apparatus, a correspondence between a remote electrical tilt device and a cell that are associated with the first communication apparatus.

In a possible implementation, a form shown in Table 4 may alternatively be used for the first mapping table.

**Table 4**

| User BBU | User cell | Anchor BBU | Anchor RRU | Remote electrical tilt device |
|---|---|---|---|---|
| BBU (L1.8 & FA) | Cell (FA) | BBU N700 | 700 RRU | RET device 1 |
| BBU (L1.8 & FA) | Cell (1.8G) | BBU N700 | 700 RRU | RET device 2 |
| BBU (G900) | Cell (900) | BBU N700 | 700 RRU | RET device 3 |
| BBU (N700) | Cell (700) | BBU N700 | 700 RRU | RET device 4 |
| ... | ... | ... | ... | ... |

As shown in Table 4, a relationship between the user BBU, the user cell, the anchor BBU, the anchor RRU, and the remote electrical tilt device may be presented in Table 4. In this way, the remote electrical tilt device can be easily managed. It may be understood that information such as the user BBU and the user cell in Table 4 may be determined by the first communication apparatus, and the first communication apparatus may send the information to the second communication apparatus; or the foregoing information may be preconfigured in the second communication apparatus, and the second communication apparatus generates the first mapping table in the form of Table 4 based on the preconfigured information and the first information sent by the first communication apparatus. This is not limited in this application. For example, the second communication apparatus traverses BBUs managed by the second communication apparatus, and obtains related information of each BBU, for example, an anchor RRU connected to the BBU, a remote electrical tilt device connected to the anchor RRU, and a cell identity associated with the RET device. In this way, a routing table from the cell to the remote electrical tilt device shown in Table 4 is constructed.

The following further describes the method 300 with reference to other accompanying drawings.

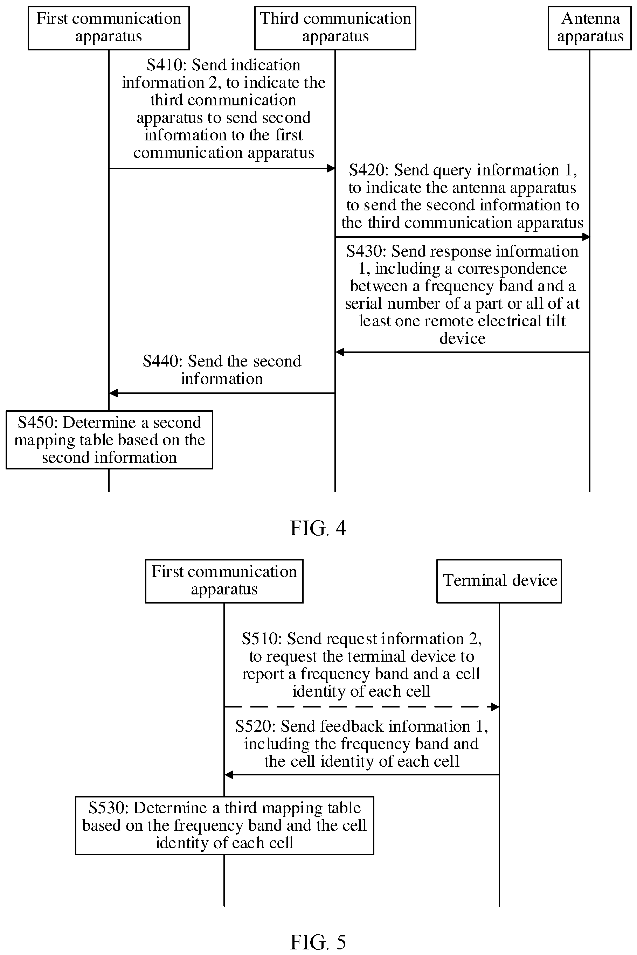

FIG. 4 is a schematic interaction flowchart of a method 400 for managing a remote electrical tilt device according to an embodiment of this application. A method procedure in FIG. 4 may be performed by a first communication apparatus, a third communication apparatus, and an antenna apparatus, or may be performed by a module and/or a component (for example, a chip or an integrated circuit) that can be installed in or connected to the first communication apparatus, the third communication apparatus, and the antenna apparatus and that have/has a corresponding function. This is not limited in this application. The following uses the first communication apparatus, the third communication apparatus, and the antenna apparatus as an example for description. As shown in FIG. 4, the method 400 includes the following steps.

S410: The first communication apparatus sends indication information 2 to the third communication apparatus, where the indication information 2 indicates the third communication apparatus to send second information to the first communication apparatus.

Correspondingly, the third communication apparatus receives the indication information 2 from the first communication apparatus, and sends the second information to the first communication apparatus based on the indication information 2.

Specifically, the first communication apparatus determines, based on the second information, a correspondence between a frequency band and a serial number of a part or all of at least one remote electrical tilt device. For descriptions of the second information, refer to Table 5.

**Table 5**

| Serial number of the remote electrical tilt device | Frequency band |
|---|---|
| 000002110130860B2 | 1710 to 1830 |
| 000002110130860B1 | 1885 to 2025 |
| 000002110130860B3 | 1710 to 1830 |

As shown in Table 5, each row in Table 5 represents a correspondence between a serial number of one remote electrical tilt device and one frequency band (or each row represents a correspondence between one remote electrical tilt device and one frequency band, which is not limited herein). For example, a remote electrical tilt device with the serial number 000002110130860B2 corresponds to the frequency band 1710 to 1830, a remote electrical tilt device with the serial number 000002110130860B1 corresponds to the frequency band 1885 to 2025, and a remote electrical tilt device with the serial number 000002110130860B3 corresponds to the frequency band 1710 to 1830. One remote electrical tilt device corresponds to one frequency band, but the one frequency band may correspond to a plurality of remote electrical tilt devices.

In a possible implementation, the second information indicates the frequency band and the serial number of the part or all of the remote electrical tilt device; or the second information indicates the serial number of the part or all of the remote electrical tilt device. The foregoing information can be used by the first communication apparatus to determine a second mapping table. In other words, the information can help the first communication apparatus determine a correspondence between a remote electrical tilt device and a frequency band.

S420: The third communication apparatus sends query information 1 to the antenna apparatus, where the query information 1 indicates the antenna apparatus to send the second information to the third communication apparatus.

Correspondingly, the antenna apparatus receives the query information 1 from the third communication apparatus, and determines, based on the query information 1, that the second information needs to be sent to the third communication apparatus.

Specifically, information exchange exists between the third communication apparatus and the antenna apparatus. Therefore, the third communication apparatus may send the query information 1 to the antenna apparatus, to obtain the correspondence between a frequency band and a serial number of the part or all of the at least one remote electrical tilt device of the antenna apparatus. The antenna apparatus sends respective corresponding query signaling to the part or all of the at least one remote electrical tilt device inside the antenna apparatus. When receiving the query signaling from the antenna apparatus, the remote electrical tilt device may feed back, to the antenna apparatus, a correspondence between a frequency band and a serial number corresponding to the remote electrical tilt device.

In an example, the remote electrical tilt device inside the antenna apparatus (or connected to the antenna apparatus) feeds back, to the antenna apparatus, the frequency band and the serial number that correspond to the remote electrical tilt device. In an example, the remote electrical tilt device inside the antenna apparatus feeds back, to the antenna apparatus, the serial number corresponding to the remote electrical tilt device. Further, the antenna apparatus collects information about the frequency band and the serial number or the serial number of the part or all of the at least one remote electrical tilt device, and feeds back the information to the third communication apparatus.

It may be understood that the antenna apparatus feeds back the serial number of the remote electrical tilt device to the third communication apparatus, and the third communication apparatus may establish the correspondence between a serial number and a frequency band (or between a remote electrical tilt device and a frequency band) of the remote electrical tilt device based on a preconfigured correspondence between a color ring number and a frequency band. Further, the third communication apparatus determines the second mapping table. Further, the third communication apparatus sends the correspondence between a serial number of the remote electrical tilt device and a frequency band to the first communication apparatus.

S430: The antenna apparatus sends response information 1 to the third communication apparatus, where the response information 1 includes the correspondence between a frequency band and a serial number of the part or all of the at least one remote electrical tilt device.

Correspondingly, the third communication apparatus receives the response information 1 from the antenna apparatus.

It should be understood that the foregoing response information 1 is a response to the query information 1. The response information 1 may also be considered as second information.

S440: The third communication apparatus sends the second information to the first communication apparatus.

Correspondingly, the first communication apparatus receives the second information from the third communication apparatus.

S450: The first communication apparatus determines the second mapping table based on the second information.

Specifically, when the second information includes the serial number and the frequency band of the remote electrical tilt device, the first communication apparatus may determine the second mapping table based on the serial number and the frequency band of the remote electrical tilt device; and when the second information includes the serial number of the remote electrical tilt device, the first communication apparatus may determine the second mapping table based on the preconfigured correspondence between a color ring number and a frequency band, and the serial number of a remote electrical tilt. A serial number of one remote electrical tilt device corresponds to one color ring number. **In** addition, for the correspondence between a color ring number and a frequency band, refer to Table 6.

**Table 6**

| Color ring number | Frequency band |
|---|---|
| R1 | 703 to 803 |
| R2 | 703 to 803 |
| R3 | 885 to 960 |
| R4 | 885 to 960 |
| B1 | 1710 to 1830 |
| B2 | 1710 to 1830 |
| B3 | 1885 to 2025 |

As shown in Table 6, one color ring number corresponds to one frequency band. For example, the color ring number #R1 corresponds to the frequency band #703 to 803, the color ring number #R2 corresponds to the frequency band #703 to 803, the color ring number #R3 corresponds to the frequency band #885 to 960, the color ring number #R4 corresponds to the frequency band #885 to 960, the color ring number #B1 corresponds to the frequency band #1710 to 1830, the color ring number #B2 corresponds to the frequency band #1710 to 1830, and the color ring number #B3 corresponds to the frequency band #1885 to 2025. The one color ring number corresponds to one frequency band range, and the one frequency band range may correspond to a plurality of color ring numbers.

Because there is a correspondence between a serial number and a color ring number of the remote electrical tilt device, and there is the correspondence between a color ring number and a frequency band, a second communication apparatus may determine the second mapping table based on the serial number of the remote electrical tilt device and the correspondence between a color ring number and a frequency band. According to the foregoing technical solution, in this application, signaling overheads of the third communication apparatus can be reduced, and the third communication apparatus feeds back only the serial number of the remote electrical tilt device to the first communication apparatus.

In a possible implementation, the first communication apparatus is a BBU, the third communication apparatus is an RRU, and the antenna apparatus is an antenna. Correspondingly, the method 400 may include the following steps.

S1: The BBU sends frequency band query request information to all RRUs (which may include an anchor RRU, or may include a non-anchor RRU) managed by the BBU, where the frequency band query request information is used for requesting the RRU to feed back the correspondence between a remote electrical tilt device and a frequency band.

In step S1, the BBU can determine the anchor RRU in the RRUs connected to the BBU. In other words, the BBU can determine an RRU having an AISG connection line. However, the BBU and the anchor RRU do not know a quantity and serial numbers of RET devices connected to the anchor RRU. Therefore, the BBU sends the frequency band query request information to the anchor RRU, to trigger the anchor RRU to query, through the AISG connection line, the connected RET devices.

S2: After receiving the frequency band query request information from the BBU, the anchor RRU sends the frequency band query request information to each RET through the AISG connection line.

S3: After receiving the frequency band query request information from the anchor RRU, the RET device returns frequency band query response information to the anchor RRU.

Correspondingly, after receiving the frequency band query response information of the RET device, the anchor RRU determines that the anchor RRU is connected to the RET device. The frequency band query response information carries a frequency band and a serial number of the RET device.

S4: The anchor RRU feeds back the frequency band and the serial number of the RET device to the BBU.

Optionally, the anchor RRU feeds back frequency bands and the serial numbers of the RET devices to the BBU one by one, or may feed back frequency bands and the serial numbers of the RET devices in batches. This is not limited in this application.

S5: The BBU determines the second mapping table based on the frequency band and the serial number of the RET device that are sent by the anchor RRU.

In a possible implementation, the first communication apparatus is a BBU, the third communication apparatus is an RRU, and the antenna apparatus is an antenna. Correspondingly, the method 400 may further include the following steps.

Q1: Input the correspondence between a color ring number and a frequency band to the BBU.

Specifically, in this application, according to an antenna specification, antenna radio frequency ports of different frequency bands are identified by using color rings of different colors. Then, each color is defined by a color ring number, and the color ring number is included in a serial number of a remote electrical tilt device.

Q2: The BBU stores the correspondence between a color ring number and a frequency band.

Q3: The BBU sends serial number query request information to all RRUs managed by the BBU.

In step Q3, the BBU knows which RRU in the RRUs connected to the BBU is an anchor RRU. In other words, the BBU knows which RRU has an AISG connection line. However, neither the BBU nor the anchor RRU knows which RET devices are connected to the anchor RRU. Therefore, the BBU sends the serial number query request information to the anchor RRU, to trigger the anchor RRU to query, through the AISG connection line, the RET devices connected to the RRU.

Q4: After receiving the serial number query request information, the anchor RRU sends the serial number query request information to each RET device through the AISG connection line.

Q5: The RET device reports a serial number corresponding to the RET to the anchor RRU.

Q6: The anchor RRU returns serial numbers of all RET devices to the BBU.

Optionally, the anchor RRU feeds back the serial numbers of the RET devices to the BBU one by one, or may feed back the serial numbers of the RET devices in batches. This is not limited in this application.

Q7: The BBU parses a color ring number from the serial number of the RET device, and then establishes a correspondence between a RET and a frequency band by using the stored correspondence between a color ring number and a frequency band.

According to the foregoing technical solution, in this application, the first communication apparatus can determine the second mapping table through interaction between the first communication apparatus, the third communication apparatus, and the antenna apparatus.

Specifically, in this application, information exchange between the first communication apparatus and the third communication apparatus is supported to obtain the second information used for determining the second mapping table, and the determined second mapping table is sent to the second communication apparatus. Correspondingly, the second communication apparatus establishes, based on a preconfigured third mapping table and the second mapping table that is sent by the first communication apparatus, an association relationship between the remote electrical tilt device and a cell that are managed by the first communication apparatus, to implement accurate electrical tilting of a cell tilt, and avoid an adjustment error of the cell tilt. In addition, when quantities of remote electrical tilt devices and cells that are managed by the first communication apparatus change, the foregoing solution can also help obtain an updated correspondence between a remote electrical tilt device and a cell.

FIG. 5 is a schematic interaction flowchart of a method 500 for managing a remote electrical tilt device according to an embodiment of this application. A method procedure in FIG. 5 may be performed by a first communication apparatus and a terminal device, or may be performed by a module and/or a component (for example, a chip or an integrated circuit) that can be installed in or connected to the first communication apparatus and that have/has a corresponding function, and a module and/or a component (for example, a chip or an integrated circuit) that can be installed in or connected to the terminal device and that have/has a corresponding function. This is not limited in this application. The following uses the first communication apparatus and the terminal device as an example for description. As shown in FIG. 5, the method 500 includes the following steps.

Optionally, S510: The first communication apparatus sends request information 2 to the terminal device, to request the terminal device to report a frequency band and a cell identity of each cell.

Correspondingly, the terminal device receives the request information 2 from the first communication apparatus, and reports the frequency band and the cell identity of each cell to the first communication apparatus based on the request information 2.

Specifically, the terminal device in step S510 is located in an anchor cell in at least two cells managed by the first communication apparatus. The terminal device may perform co-coverage measurement on each cell. For example, the first communication apparatus may configure the terminal device in the anchor cell to perform inter-frequency/inter-RAT cell detection.

Specifically, after performing inter-frequency/inter-RAT cell detection in the anchor cell, the terminal device sends an obtained measurement result to the first communication apparatus. The measurement result includes the cell identity and the frequency band of each cell.

S520: The terminal device sends feedback information 1 to the first communication apparatus, where the feedback information 1 includes the cell identity and the frequency band of each cell.

Correspondingly, the first communication apparatus receives the feedback information 1 from the terminal device.

In a possible implementation, the cell identity includes a physical cell identifier (physical cell identifier, PCI), or may include another identity used for distinguishing between cells. This is not limited in this application.

S530: The first communication apparatus determines a third mapping table based on the cell identity and the frequency band of each cell.

In conclusion, the first communication apparatus determines the third mapping table by interacting with the terminal device.

It should be noted that in this embodiment of this application, that the terminal device performs co-coverage learning is used as an example to describe a case in which the terminal device obtains the cell identity and the frequency band of each cell, but another possible implementation is not limited. For specific descriptions of the co-coverage learning, refer to an existing protocol. Details are not described herein.

In a possible implementation, the first communication apparatus is a BBU, and a second communication apparatus is an OMC. The method 500 may further include the following steps.

W1: The OMC sends measurement request information to a BBU corresponding to an anchor RRU.

Specifically, the measurement request information is used for triggering the BBU to indicate the terminal device in the anchor cell to perform co-coverage measurement.

W2: After receiving the measurement request information from the OMC, the BBU configures, in the anchor cell, the terminal device to perform inter-frequency/inter-RAT cell detection.

W3: After performing inter-frequency/inter-RAT cell detection in the anchor cell, the terminal device sends the measurement result including the cell identity and the frequency band of each cell to the BBU.

Further, the BBU determines the third mapping table based on the measurement result sent by the terminal device.

Optionally, the BBU may also send, to the OMC, the measurement result sent by the terminal device, and the OMC performs co-sector identification, to obtain the third mapping table.

According to the foregoing technical solution, in this application, the first communication apparatus can determine the third mapping table through interaction between the first communication apparatus and the terminal device.

Specifically, in this application, information exchange between the first communication apparatus and the terminal device is supported to obtain information that is used for determining the third mapping table and that is about the frequency band and the cell identity of each cell, and the determined third mapping table is sent to the second communication apparatus. Correspondingly, the second communication apparatus establishes, based on a preconfigured second mapping table and the third mapping table that is sent by the first communication apparatus, an association relationship between a remote electrical tilt device and the cell that are managed by the first communication apparatus, to implement accurate electrical tilting of a cell tilt, and avoid an adjustment error of the cell tilt. In addition, when quantities of remote electrical tilt devices and cells that are managed by the first communication apparatus change, the foregoing solution can also help obtain an updated correspondence between a remote electrical tilt device and a cell.

It should be noted that the method 400 and the method 500 may be combined with each other, to form a new technical solution. For example, the first communication apparatus determines the second mapping table by using the method 400, and determines the third mapping table by using the method 500; or the first communication apparatus determines the third mapping table by using the method 500, and determines the second mapping table by using the method 400. Correspondingly, the first communication apparatus sends at least one of the second mapping table and the third mapping table to the second communication apparatus, or the first communication apparatus sends, to the second communication apparatus, the first mapping table generated by the first communication apparatus based on the second mapping table and the third mapping table. This is not limited in this application.

It should be further noted that the second communication apparatus may have a co-sector identification function, a routing table function, and a route scheduling function. Specifically, the co-sector identification function refers to determining, based on a co-coverage learning result fed back by the first communication apparatus, which cells are co-sector cells. The routing table function refers to establishing a correspondence between a cell and a RET device based on a co-sector identification result. The route scheduling function refers to using a routing table to support automatic management of the RET device. For example, if a cell is input, corresponding RET information may be returned, a tilt of the cell may be adjusted, a corresponding RET device may be found by a system automatically, and the like. The first communication apparatus has an information management function of the RET device and a co-coverage learning function. The information management function of the RET device refers to that information about all RET devices can be obtained, including a frequency band and a serial number of the RET device. The co-coverage learning function refers to taking responsibility for performing co-coverage processing on an anchor cell corresponding to an anchor RRU and identifying a co-coverage interfrequency neighboring cell based on co-coverage learning. The antenna apparatus has an information base of the RET device. The antenna apparatus can provide a query interface for the third communication apparatus to query information about the RET device.

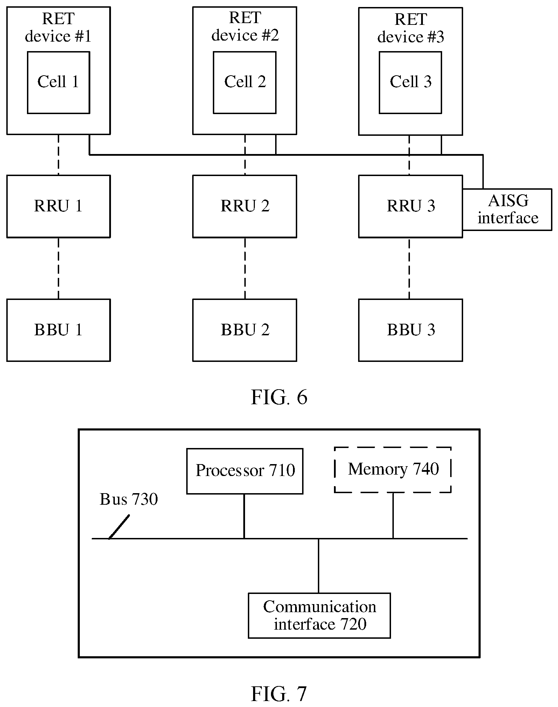

The following further describes the foregoing method for managing the remote electrical tilt device with reference to FIG. 6.

FIG. 6 is an application diagram of a method for managing a remote electrical tilt device according to an embodiment of this application. As shown in FIG. 6, dashed lines between a BBU, an RRU, a cell, and a RET device indicate a logical relationship between the four, but cannot indicate a physical connection relationship between the four. An RRU 3 is an anchor RRU, and may be connected to a RET device 1 to a RET device 3 through an AISG interface (referring to solid lines in FIG. 6), to adjust a tilt of a corresponding cell. A correspondence between the RET device and the cell may be obtained by using the foregoing method. A second communication apparatus (for example, a network management system) is connected to BBUs 1 to 3 in FIG. 6, and an administrator may input a parameter or a control command to the second communication apparatus. For example, the administrator inputs a cell tilt adjustment command to the second communication apparatus through an interface operating system, and the second communication apparatus may control the RRU 3 by using the BBU 3, so that the RET 1 device 1 to the RET device 3 can be controlled by using the RRU 3. In this way, the tilt of the corresponding cell is accurately adjusted. For example, if the administrator (or the second communication apparatus) adjusts a tilt of a cell 3 by configuration, the second communication apparatus may control the RET device 3 by using the RRU 3, to implement accurate adjustment of the tilt of the cell 3. For another example, if the administrator (or the second communication apparatus) adjusts a tilt of a cell 1 by configuration, the second communication apparatus may control the RET device 1 by using the RRU 3, to implement accurate adjustment of the tilt of the cell 1.

The foregoing describes the method embodiments in embodiments of this application, and the following describes corresponding apparatus embodiments.

To implement functions in the methods provided in embodiments of this application, a terminal and a network device may each include a hardware structure and/or a software module, to implement the functions in a form of the hardware structure, the software module, or a combination of the hardware structure and the software module. Whether a function in the foregoing functions is performed in a manner of the hardware structure, the software module, or the combination of the hardware structure and the software module depends on particular applications and design constraint conditions of the technical solutions.

FIG. 7 is a block diagram of a communication apparatus 700 according to an embodiment of this application. The communication apparatus 700 includes a processor 710 and a communication interface 720. The processor 710 and the communication interface 720 may be connected to each other through a bus 730. The communication apparatus 700 shown in FIG. 7 may be any one of a first communication apparatus, a second communication apparatus, a third communication apparatus, and a terminal device.

Optionally, the communication apparatus 700 further includes a memory 740.

The memory 740 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 740 is used for related instructions and data.

The processor 710 may be one or more central processing units (central processing units, CPUs). When the processor 710 is one CPU, the CPU may be a single-core CPU, or may be a multi-core CPU.

When the communication apparatus 700 is the first communication apparatus, for example, the processor 710 is configured to perform the following operations: generating first information, where the first information is used for determining a first mapping table, and each mapping relationship in the first mapping table indicates a correspondence between one remote electrical tilt and one or more cells; and sending the first information to a second communication apparatus.

The foregoing content is merely used as an example for description. When the communication apparatus 700 is the first communication apparatus, the communication apparatus 700 is responsible for performing the methods or steps related to the first communication apparatus in the foregoing method embodiments.

When the communication apparatus 700 is the second communication apparatus, for example, the processor 710 is configured to perform the following operations: receiving first information from a first communication apparatus, where the first information is used for determining a first mapping table, and each mapping relationship in the first mapping table indicates a correspondence between one remote electrical tilt and one or more cells; and generating the first mapping table based on the first information, where the first communication apparatus is configured to manage at least one remote electrical tilt and at least two cells.

The foregoing content is merely used as an example for description. When the communication apparatus 700 is the second communication apparatus, the communication apparatus 700 is responsible for performing the methods or steps related to the second communication apparatus in the foregoing method embodiments.

When the communication apparatus 700 is the third communication apparatus, for example, the processor 710 is configured to perform the following operations: generating second information, where the second information is used for determining a correspondence between a frequency band and a serial number of a part or all of at least one remote electrical tilt managed by a first communication apparatus; and sending the second information to the first communication apparatus.

The foregoing content is merely used as an example for description. When the communication apparatus 700 is the third communication apparatus, the communication apparatus 700 is responsible for performing the methods or steps related to the third communication apparatus in the foregoing method embodiments.

When the communication apparatus 700 is an antenna apparatus, for example, the processor 710 is configured to perform the following operations: receiving query information from a third communication apparatus; and sending second information to the third communication apparatus, where the second information is used for determining a correspondence between a frequency band and a serial number of a part or all of at least one remote electrical tilt, and the second information is response information for the query information.

The foregoing content is merely used as an example for description. When the communication apparatus 700 is the antenna apparatus, the communication apparatus 700 is responsible for performing the methods or steps related to the antenna apparatus in the foregoing method embodiments.

When the communication apparatus 700 is a terminal device, for example, the processor 710 is configured to perform the following operations: receiving request information 2 from a first communication apparatus; and sending feedback information 1 to the first communication apparatus.

The foregoing content is merely used as an example for description. When the communication apparatus 700 is the terminal device, the communication apparatus 700 is responsible for performing the methods or steps related to the terminal device in the foregoing method embodiments.

The foregoing descriptions are merely examples. For specific content, refer to content shown in the method embodiments. In addition, for implementation of each operation in FIG. 7, refer to the corresponding descriptions in the method embodiments shown in FIG. 3 to FIG. 6.

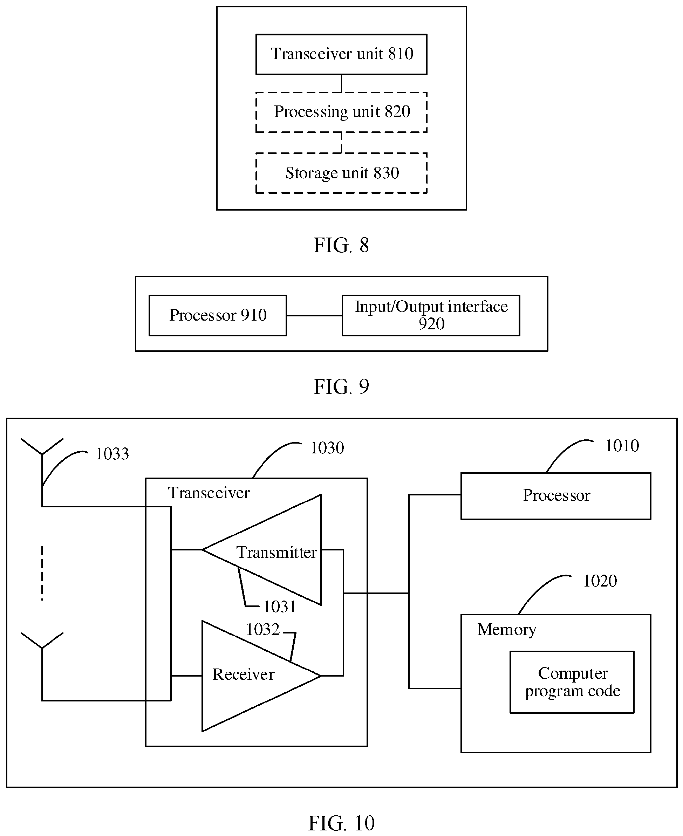

FIG. 8 is a block diagram of a communication apparatus 800 according to an embodiment of this application. The communication apparatus 800 may be the network device or the terminal device in the foregoing embodiments, or may be a chip or a module in the network device or the terminal device, and is configured to implement the methods in the foregoing embodiments. The communication apparatus 800 includes a transceiver unit 810 and a processing unit 820. The following describes the transceiver unit 810 and the processing unit 820 by using examples.

The transceiver unit 810 may include a sending unit and a receiving unit that are respectively configured to implement a sending function or a receiving function in the foregoing method embodiments. The transceiver unit 810 may further include a processing unit, configured to implement a function other than the sending function or the receiving function.

When the communication apparatus 800 is a first communication apparatus, for example, the processing unit 820 is configured to generate first information, where the first information is used for determining a first mapping table, and each mapping relationship in the first mapping table indicates a correspondence between one remote electrical tilt and one or more cells; and the transceiver unit 810 is configured to send the first information to a second communication apparatus.

Optionally, the communication apparatus 800 further includes a storage unit 830, and the storage unit 830 is configured to store a program or code used for performing the foregoing methods.

The foregoing content is merely used as an example for description. When the communication apparatus 800 is the first communication apparatus, the communication apparatus 800 is responsible for performing the methods or steps related to the first communication apparatus in the foregoing method embodiments.

When the communication apparatus 800 is a second communication apparatus, for example, the transceiver unit 810 is configured to receive first information from a first communication apparatus, where the first information is used for determining a first mapping table, and each mapping relationship in the first mapping table indicates a correspondence between one remote electrical tilt and one or more cells; and the processing unit 820 is configured to generate the first mapping table based on first learning.

Optionally, the communication apparatus 800 further includes a storage unit 830, and the storage unit 830 is configured to store a program or code used for performing the foregoing methods.

The foregoing content is merely used as an example for description. When the communication apparatus 800 is the second communication apparatus, the communication apparatus 800 is responsible for performing the methods or steps related to the second communication apparatus in the foregoing method embodiments.

When the communication apparatus 800 is a third communication apparatus, for example, the processing unit 820 is configured to generate second information, where the second information is used for determining a correspondence between a frequency band and a serial number of a part or all of at least one remote electrical tilt managed by a first communication apparatus; and the transceiver unit 810 is configured to send the second information to the first communication apparatus.

Optionally, the communication apparatus 800 further includes a storage unit 830, and the storage unit 830 is configured to store a program or code used for performing the foregoing methods.

The foregoing content is merely used as an example for description. When the communication apparatus 800 is the third communication apparatus, the communication apparatus 800 is responsible for performing the methods or steps related to the third communication apparatus in the foregoing method embodiments.

When the communication apparatus 800 is an antenna apparatus, for example, the transceiver unit 810 is configured to receive query information from a third communication apparatus; and the transceiver unit 810 is configured to send second information to the third communication apparatus, where the second information is used for determining a correspondence between a frequency band and a serial number of a part or all of at least one remote electrical tilt, and the second information is response information for the query information.

Optionally, the communication apparatus 800 further includes a storage unit 830, and the storage unit 830 is configured to store a program or code used for performing the foregoing methods.

The foregoing content is merely used as an example for description. When the communication apparatus 800 is the antenna apparatus, the communication apparatus 800 is responsible for performing the methods or steps related to the antenna apparatus in the foregoing method embodiments.

When the communication apparatus 800 is a terminal device, for example, the transceiver unit 810 is configured to receive request information 2 from a first communication apparatus; and the transceiver unit 810 is configured to send feedback information 1 to the first communication apparatus.

The foregoing content is merely used as an example for description. When the communication apparatus 800 is the terminal device, the communication apparatus 800 is responsible for performing the methods or steps related to the terminal device in the foregoing method embodiments.

In addition, for implementation of each operation in FIG. 8, refer to the corresponding descriptions in the methods shown in the foregoing embodiments. Details are not described herein again.

The apparatus embodiments shown in FIG. 7 and FIG. 8 are used for implementing the content described in FIG. 3 to FIG. 6 in the foregoing method embodiments. Therefore, for specific execution steps and methods of the apparatuses shown in FIG. 7 and FIG. 8, refer to the content described in the foregoing method embodiments.

It should be understood that the transceiver unit may include the sending unit and the receiving unit. The sending unit is configured to perform a sending action of the communication apparatus, and the receiving unit is configured to perform a receiving action of the communication apparatus. For ease of description, in embodiments of this application, the sending unit and the receiving unit are combined into one transceiver unit. Unified descriptions are provided herein, and details are not described below again.

FIG. 9 is a diagram of a communication apparatus 900 according to an embodiment of this application. The communication apparatus 900 may be configured to implement functions of the network device and the terminal device in the foregoing method. The communication apparatus 900 may be a chip in the network device or the terminal device.

The communication apparatus 900 includes an input/output interface 920 and a processor 910. The input/output interface 920 may be an input/output circuit. The processor 910 may be a signal processor, a chip, or another integrated circuit that can implement the method in this application. The input/output interface 920 is configured to input or output a signal or data.

For example, when the communication apparatus 900 is a first communication apparatus, the input/output interface 920 is configured to send first information to a second communication apparatus; and the processor 910 is configured to generate the first information, where the first information is used for determining a first mapping table, and each mapping relationship in the first mapping table indicates a correspondence between one remote electrical tilt and one or more cells. The processor 910 is configured to perform some or all steps of any method provided in this application.

For example, when the communication apparatus 900 is a second communication apparatus, the input/output interface 920 is configured to receive first information from a first communication apparatus, where the first information is used for determining a first mapping table, and each mapping relationship in the first mapping table indicates a correspondence between one remote electrical tilt and one or more cells; and the processor 910 is configured to generate the first mapping table based on the first information. The processor 910 is configured to perform some or all steps of any method provided in this application.

In a possible implementation, the processor 910 executes instructions stored in a memory, to implement the function implemented by the network device or the terminal device.

Optionally, the communication apparatus 900 further includes the memory.

Optionally, the processor and the memory are integrated together.

Optionally, the memory is outside the communication apparatus 900.

In a possible implementation, the processor 910 may be a logic circuit, and the processor 910 inputs/outputs a message or signaling through the input/output interface 920. The logic circuit may be a signal processor, a chip, or another integrated circuit that can implement the method in embodiments of this application.

The foregoing descriptions of the apparatus in FIG. 9 are merely an example for description. The apparatus can be configured to perform the method in the foregoing embodiments. For specific content, refer to the descriptions in the foregoing method embodiments. Details are not described herein again.

FIG. 10 is a block diagram of a communication apparatus 1000 according to an embodiment of this application. The communication apparatus 1000 may be a network device or a chip. The communication apparatus 1000 may be configured to perform an operation performed by the network device in the method embodiments shown in FIG. 3 to FIG. 6.

When the communication apparatus 1000 is the network device, for example, a base station, FIG. 10 is a diagram of a simplified structure of the base station. The base station includes a part 1010, a part 1020, and a part 1030. The part 1010 is mainly configured to: perform baseband processing, control the base station, and the like. The part 1010 is usually a control center of the base station, may be usually referred to as a processor, and is configured to control the base station to perform a processing operation on a network device side in the foregoing method embodiments. The part 1020 is mainly configured to store computer program code and data. The part 1030 is mainly configured to: receive and transmit a radio frequency signal, and perform conversion between the radio frequency signal and a baseband signal. The part 1030 may be usually referred to as a transceiver module, a transceiver machine, a transceiver circuit, a transceiver, or the like. The transceiver module in the part 1030 may also be referred to as a transceiver machine, a transceiver, or the like, and includes an antenna 1033 and a radio frequency circuit (not shown in FIG. 10), where the radio frequency circuit is mainly configured to perform radio frequency processing. Optionally, in the part 1030, a component configured to implement a receiving function may be considered as a receiver, and a component configured to implement a sending function may be considered as a transmitter. In other words, the part 1030 includes a receiver 1032 and a transmitter 1031. The receiver may also be referred to as a receiving module, a receiver machine, a receiver circuit, or the like, and the transmitter may be referred to as a transmitting module, a transmitter machine, a transmitter circuit, or the like.

The part 1010 and the part 1020 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share the one or more processors, the plurality of boards share the one or more memories, or the plurality of boards share the one or more processors at the same time.

For example, in an implementation, the transceiver module in the part 1030 is configured to perform a receiving and sending-related process performed by the network device in embodiments shown in FIG. 3 to FIG. 6. The processor in the part 1010 is configured to perform a processing-related process performed by the network device in embodiments shown in FIG. 3 to FIG. 6.

In another implementation, the processor in the part 1010 is configured to perform a processing-related process performed by the communication device in embodiments shown in FIG. 3 to FIG. 6.

In another implementation, the transceiver module in the part 1030 is configured to perform a receiving and sending-related process performed by the communication device in embodiments shown in FIG. 3 to FIG. 6.

It should be understood that FIG. 10 is merely an example rather than a limitation. The network device including the processor, the memory, and the transceiver may not depend on the structures shown in FIG. 7 to FIG. 9.

When the communication apparatus 1000 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

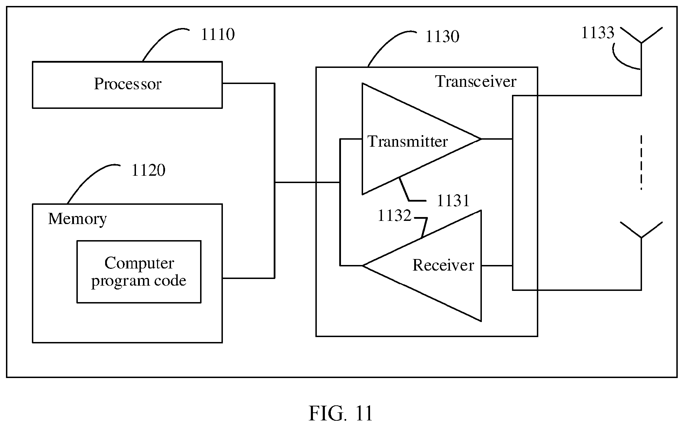

FIG. 11 is a block diagram of a communication apparatus 1100 according to an embodiment of this application. The communication apparatus 1100 may be a terminal device, a processor of the terminal device, or a chip. The communication apparatus 1100 may be configured to perform an operation performed by the terminal device or the communication device in the foregoing method embodiments.

When the communication apparatus 1100 is the terminal device, FIG. 11 is a diagram of a simplified structure of the terminal device. As shown in FIG. 11, the terminal device includes a processor, a memory, and a transceiver. The memory may store computer program code. The transceiver includes a transmitter 1131, a receiver 1132, a radio frequency circuit (not shown in the figure), an antenna 1133, and an input/output apparatus (not shown in FIG. 11).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends a radio frequency signal to the outside in the form of the electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 11 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 11, the terminal device includes a processor 1111, a memory 1120, and a transceiver 1130. The processor 1111 may also be referred to as a processing unit, a processing board, a processing module, a processing apparatus, or the like. The transceiver 1130 may also be referred to as a transceiver unit, a transceiver machine, a transceiver apparatus, or the like.

Optionally, a component configured to implement a receiving function in the transceiver 1130 may be considered as a receiving module, and a component configured to implement a sending function in the transceiver 1130 may be considered as a sending module. That is, the transceiver 1130 includes a receiver machine and a transmitter machine. The transceiver may also be sometimes referred to as a transceiver machine, a transceiver module, a transceiver circuit, or the like. The receiver machine may also be sometimes referred to as a receiver, a receiving module, a receiver circuit, or the like. The transmitter machine may also be sometimes referred to as a transmitter, a transmitting module, a transmitter circuit, or the like.

For example, in an implementation, the processor 1111 is configured to perform a processing action on a terminal device side in embodiments shown in FIG. 3 to FIG. 6, and the transceiver 1130 is configured to perform receiving and sending actions on the terminal device side in FIG. 3 to FIG. 6.

For example, in an implementation, the processor 1111 is configured to perform a processing action on a terminal device side in embodiments shown in FIG. 3 to FIG. 6, and the transceiver 1130 is configured to perform receiving and sending actions on the terminal device side in FIG. 3 to FIG. 6.

It should be understood that FIG. 11 is merely an example rather than a limitation. The terminal device including the transceiver module and the processing module may not depend on the structures shown in FIG. 7 to FIG. 9.

When the communication apparatus 1100 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

This application further provides a chip, including a processor. The processor is configured to invoke, from a memory, instructions stored in the memory and run the instructions, to enable a communication device on which the chip is installed to perform the methods in the foregoing examples.

This application further provides another chip, including an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes the memory. The memory is configured to store a computer program or code.

This application further provides a processor, configured to be coupled to a memory, and configured to perform a method and a function that are related to the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

In the descriptions of embodiments of this application, unless otherwise specified, "a plurality of" means two or more. "At least one of the following (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, for ease of clearly describing the technical solutions in embodiments of this application, in embodiments of this application, words such as "first" and "second" are used to distinguish between same items or similar items that have basically the same functions and purposes. A person skilled in the art may understand that the words such as "first" and "second" do not limit a quantity and an execution sequence, and the words such as "first" and "second" do not indicate a definite difference. In addition, in embodiments of this application, words such as "example" or "for example" are used to represent giving an example, an illustration, or a description.

Any embodiment or design solution described as "example" or "for example" in embodiments of this application should not be explained as being more preferred or having more advantages than another embodiment or design solution. Specifically, the words such as "example" or "for example" are used to present a related concept in a specific manner for ease of understanding.

In the descriptions of embodiments of this application, unless otherwise specified, "/" represents an "or" relationship between associated objects. For example, A/B may represent A or B. "And/or" in this application describes only an association relationship for describing associated objects and represents that three relationships may exist. For example, A and/or B may indicate the following three cases: Only A exists, both A and B exist, and only B exists, where A and B may be singular or plural.

Sequence numbers of the foregoing processes do not mean execution sequences in embodiments of this application. The execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When functions are implemented in a form of a software functional unit and sold or used as an independent product, the functions may be stored in a computer-readable storage medium. Based on such an understanding, the technical solutions of embodiments of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A method for managing a remote electrical tilt device, wherein the method is applied to a first communication apparatus side, the first communication apparatus is configured to manage at least one remote electrical tilt device and at least two cells, and the method comprises:
generating first information, wherein the first information is used for determining a first mapping table, and each mapping relationship in the first mapping table indicates a correspondence between one remote electrical tilt device and one or more cells; and
sending the first information to a second communication apparatus.

2. The method according to claim 1, wherein the first communication apparatus supports at least two frequency bands, and the first information comprises at least one of the following:
the first mapping table, a second mapping table, or a third mapping table, wherein
each mapping relationship in the second mapping table indicates a correspondence between one remote electrical tilt device and one frequency band;
each mapping relationship in the third mapping table indicates a correspondence between one cell and one frequency band; and
the first mapping table is determined based on the second mapping table and the third mapping table.

3. The method according to claim 2, wherein the first information comprises the second mapping table, and the generating first information comprises:
receiving second information from a third communication apparatus, wherein the second information is used for determining a correspondence between a frequency band and a serial number of a part or all of the at least one remote electrical tilt device; and
determining the second mapping table based on the second information.

4. The method according to claim 3, wherein
the second information indicates the frequency band and the serial number of the part or all of the remote electrical tilt device; or
the second information indicates the serial number of the part or all of the remote electrical tilt device.

5. The method according to claim 3 or 4, wherein the second information comprises the serial number of the part or all of the remote electrical tilt device, and the determining the second mapping table based on the second information comprises:
determining the second mapping table based on the serial number of the part or all of the remote electrical tilt device and a preconfigured correspondence between a color ring number and a frequency band, wherein
a serial number of one remote electrical tilt device corresponds to one color ring number, and one color ring number corresponds to one frequency band.

6. The method according to any one of claims 2 to 5, wherein the first information comprises the third mapping table, and the generating first information comprises:
sending first request information to a terminal device, wherein the terminal device is located in an anchor cell in the at least two cells;
receiving first feedback information from the terminal device, wherein the first feedback information is a response to the first request information, and the first feedback information comprises a frequency band and a cell identity of each of the at least two cells; and
determining the third mapping table based on the frequency band and the cell identity of each cell.

7. The method according to claim 2, wherein the first information comprises the first mapping table, and the generating first information comprises:
receiving third information from a third communication apparatus, wherein the third information is used for determining a correspondence between a frequency band and a serial number of a part or all of the at least one remote electrical tilt device;
determining the second mapping table based on the third information;
sending second request information to a terminal device, wherein the terminal device is located in an anchor cell in the at least two cells;
receiving second feedback information from the terminal device, wherein the second feedback information is a response to the second request information, and the second feedback information comprises a frequency band and a cell identity of each of the at least two cells;
determining the third mapping table based on the frequency band and the cell identity of each cell; and
determining the first mapping table based on the second mapping table and the third mapping table.

8. The method according to claim 7, wherein
the third information indicates the frequency band and the serial number of the part or all of the remote electrical tilt device; or
the third information indicates the serial number of the part or all of the remote electrical tilt device.

9. The method according to claim 7 or 8, wherein the third information comprises the serial number of the part or all of the remote electrical tilt device, and the determining the second mapping table based on the second information comprises:
determining the second mapping table based on the serial number of the part or all of the remote electrical tilt device and a preconfigured correspondence between a color ring number and a frequency band, wherein
a serial number of one remote electrical tilt device corresponds to one color ring number, and one color ring number corresponds to one frequency band.

10. The method according to any one of claims 1 to 9, wherein the method further comprises:
receiving first indication information from the second communication apparatus, wherein the first indication information indicates to adjust a tilt of a first cell, and the first cell is any one of the at least two cells;
determining, based on the first mapping table, a first remote electrical tilt device corresponding to the first cell; and
adjusting the tilt of the first cell by using the first remote electrical tilt device.

11. The method according to any one of claims 1 to 10, wherein the method further comprises:
receiving second indication information from the second communication apparatus, wherein the second indication information indicates the first communication apparatus to send the first information to the second communication apparatus.

12. A method for managing a remote electrical tilt device, wherein the method is applied to a second communication apparatus side, and the method comprises:
receiving first information from a first communication apparatus, wherein the first information is used for determining a first mapping table, and each mapping relationship in the first mapping table indicates a correspondence between one remote electrical tilt device and one or more cells; and
generating the first mapping table based on the first information, wherein
the first communication apparatus is configured to manage at least one remote electrical tilt device and at least two cells.

13. The method according to claim 12, wherein the first communication apparatus supports at least two frequency bands, and the first information comprises at least one of the following:
the first mapping table, a second mapping table, or a third mapping table, wherein
each mapping relationship in the second mapping table indicates a correspondence between one remote electrical tilt device and one frequency band;
each mapping relationship in the third mapping table indicates a correspondence between one cell and one frequency band; and
the first mapping table is determined based on the second mapping table and the third mapping table.

14. The method according to claim 13, wherein the first information comprises the second mapping table, and the generating the first mapping table based on the first information comprises:
generating the first mapping table based on the second mapping table and the preconfigured third mapping table.

15. The method according to claim 13, wherein the first information comprises the third mapping table, and the generating the first mapping table based on the first information comprises:
generating the first mapping table based on the third mapping table and the preconfigured second mapping table.

16. The method according to claim 13, wherein the first information comprises the second mapping table and the third mapping table, and the generating the first mapping table based on the first information comprises:
generating the first mapping table based on the third mapping table and the second mapping table.

17. The method according to any one of claims 12 to 16, wherein the method further comprises:
sending first indication information to the first communication apparatus, wherein the first indication information indicates to adjust a tilt of a first cell, and the first cell is any one of the at least two cells.

18. The method according to any one of claims 12 to 17, wherein the method further comprises:
sending second indication information to the first communication apparatus, wherein the second indication information indicates the first communication apparatus to send the first information to the second communication apparatus.

19. A method for managing a remote electrical tilt device, wherein the method is applied to a third communication apparatus side, and the method comprises:
generating second information, wherein the second information is used for determining a correspondence between a frequency band and a serial number of a part or all of at least one remote electrical tilt device; and
sending the second information to a first communication apparatus.

20. The method according to claim 19, wherein
the second information indicates the frequency band and the serial number of the part or all of the remote electrical tilt device; or
the second information indicates the serial number of the part or all of the remote electrical tilt device.

21. The method according to claim 20, wherein the second information indicates the frequency band and the serial number of the part or all of the remote electrical tilt device, and the generating second information comprises:
sending first query information to an antenna apparatus, wherein the antenna apparatus comprises the at least one remote electrical tilt device;
receiving first response information from the antenna apparatus, wherein the first response information is a response to the first query information, and the first response information comprises the frequency band and the serial number of the part or all of the remote electrical tilt device; and
determining the second information based on the first response information.

22. The method according to claim 20, wherein the second information indicates the serial number of the part or all of the remote electrical tilt device, and the generating second information comprises:
sending second query information to an antenna apparatus, wherein the antenna apparatus comprises the at least one remote electrical tilt device;
receiving second response information from the antenna apparatus, wherein the second response information is a response to the second query information, and the second response information comprises the serial number of the part or all of the remote electrical tilt device; and
determining the second information based on the second response information.

23. The method according to any one of claims 19 to 22, wherein the method further comprises:
receiving indication information from the first communication apparatus, wherein the indication information indicates to send the second information.

24. A method for managing a remote electrical tilt device, wherein the method is applied to an antenna apparatus, the antenna apparatus comprises at least one remote electrical tilt device, and the method comprises:
receiving query information from a third communication apparatus; and
sending second information to the third communication apparatus, wherein the second information is used for determining a correspondence between a frequency band and a serial number of a part or all of the at least one remote electrical tilt device, and
the second information is a response to the query information.

25. The method according to claim 24, wherein
the second information indicates the frequency band and the serial number of the part or all of the remote electrical tilt device; or
the second information indicates the serial number of the part or all of the remote electrical tilt device.

26. A communication apparatus, comprising:
a processing unit, configured to generate first information, wherein the first information is used for determining a first mapping table, and each mapping relationship in the first mapping table indicates a correspondence between one remote electrical tilt device and one or more cells; and
a transceiver unit, configured to send the first information to a second communication apparatus.

27. The apparatus according to claim 26, wherein the communication apparatus supports at least two frequency bands, and the first information comprises at least one of the following:
the first mapping table, a second mapping table, or a third mapping table, wherein
each mapping relationship in the second mapping table indicates a correspondence between one remote electrical tilt device and one frequency band;
each mapping relationship in the third mapping table indicates a correspondence between one cell and one frequency band; and
the first mapping table is determined based on the second mapping table and the third mapping table.

28. The apparatus according to claim 27, wherein the first information comprises the second mapping table;
the transceiver unit is further configured to receive second information from a third communication apparatus, wherein the second information is used for determining a correspondence between a frequency band and a serial number of a part or all of the at least one remote electrical tilt device; and
the processing unit is further configured to determine the second mapping table based on the second information.

29. The apparatus according to claim 28, wherein
the second information indicates the frequency band and the serial number of the part or all of the remote electrical tilt device; or
the second information indicates the serial number of the part or all of the remote electrical tilt device.

30. The apparatus according to claim 28 or 29, wherein the second information comprises the serial number of the part or all of the remote electrical tilt device; and
the processing unit is further configured to determine the second mapping table based on the serial number of the part or all of the remote electrical tilt device and a preconfigured correspondence between a color ring number and a frequency band, wherein
a serial number of one remote electrical tilt device corresponds to one color ring number, and one color ring number corresponds to one frequency band.

31. The apparatus according to claim 27, wherein the first information comprises the third mapping table;
the transceiver unit is further configured to send first request information to a terminal device, wherein the terminal device is located in an anchor cell in the at least two cells;
the transceiver unit is further configured to receive first feedback information from the terminal device, wherein the first feedback information is a response to the first request information, and the first feedback information comprises a frequency band and a cell identity of each of the at least two cells; and
the processing unit is further configured to determine the third mapping table based on the frequency band and the cell identity of each cell.

32. The apparatus according to claim 27, wherein the first information comprises the first mapping table;
the transceiver unit is further configured to receive third information from a third communication apparatus, wherein the third information is used for determining a correspondence between a frequency band and a serial number of a part or all of the at least one remote electrical tilt device;
the processing unit is further configured to determine the second mapping table based on the third information;
the transceiver unit is further configured to send second request information to a terminal device, wherein the terminal device is located in an anchor cell in the at least two cells;
the transceiver unit is further configured to receive second feedback information from the terminal device, wherein the second feedback information is a response to the second request information, and the second feedback information comprises a frequency band and a cell identity of each of the at least two cells;
the processing unit is further configured to determine the third mapping table based on the frequency band and the cell identity of each cell; and
the processing unit is further configured to determine the first mapping table based on the second mapping table and the third mapping table.

33. The apparatus according to claim 32, wherein
the third information indicates the frequency band and the serial number of the part or all of the remote electrical tilt device; or
the third information indicates the serial number of the part or all of the remote electrical tilt device.

34. The apparatus according to claim 32 or 33, wherein the third information comprises the serial number of the part or all of the remote electrical tilt device; and
the processing unit is further configured to determine the second mapping table based on the serial number of the part or all of the remote electrical tilt device and a preconfigured correspondence between a color ring number and a frequency band, wherein
a serial number of one remote electrical tilt device corresponds to one color ring number, and one color ring number corresponds to one frequency band.

35. The apparatus according to any one of claims 26 to 34, wherein
the transceiver unit is further configured to receive first indication information from the second communication apparatus, wherein the first indication information indicates to adjust a tilt of a first cell, and the first cell is any one of the at least two cells;
the processing unit is further configured to determine, based on the first mapping table, a first remote electrical tilt device corresponding to the first cell; and
the processing unit is further configured to adjust the tilt of the first cell by using the first remote electrical tilt device.

36. The apparatus according to any one of claims 26 to 35, wherein
the transceiver unit is further configured to receive second indication information from the second communication apparatus, wherein the second indication information indicates the first communication apparatus to send the first information to the second communication apparatus.

37. A communication apparatus, comprising:
a transceiver unit, configured to receive first information from a first communication apparatus, wherein the first information is used for determining a first mapping table, and each mapping relationship in the first mapping table indicates a correspondence between one remote electrical tilt device and one or more cells; and
a processing unit, configured to generate the first mapping table based on the first information, wherein
the first communication apparatus is configured to manage at least one remote electrical tilt device and at least two cells.

38. The apparatus according to claim 37, wherein the first communication apparatus supports at least two frequency bands, and the first information comprises at least one of the following:
the first mapping table, a second mapping table, or a third mapping table, wherein
each mapping relationship in the second mapping table indicates a correspondence between one remote electrical tilt device and one frequency band;
each mapping relationship in the third mapping table indicates a correspondence between one cell and one frequency band; and
the first mapping table is determined based on the second mapping table and the third mapping table.

39. The apparatus according to claim 38, wherein the first information comprises the second mapping table, and based on the first information,
the processing unit is further configured to generate the first mapping table based on the second mapping table and the preconfigured third mapping table.

40. The apparatus according to claim 38, wherein the first information comprises the third mapping table, and based on the first information,
the processing unit is further configured to generate the first mapping table based on the third mapping table and the preconfigured second mapping table.

41. The apparatus according to claim 38, wherein the first information comprises the second mapping table and the third mapping table, and based on the first information,
the processing unit is further configured to generate the first mapping table based on the third mapping table and the second mapping table.

42. The apparatus according to any one of claims 37 to 41, wherein
the transceiver unit is further configured to send first indication information to the first communication apparatus, wherein the first indication information indicates to adjust a tilt of a first cell, and the first cell is any one of the at least two cells.

43. The apparatus according to any one of claims 37 to 42, wherein
the transceiver unit is further configured to send second indication information to the first communication apparatus, wherein the second indication information indicates the first communication apparatus to send the first information to the second communication apparatus.

44. A communication apparatus, comprising:
a processing unit, configured to generate second information, wherein the second information is used for determining a correspondence between a frequency band and a serial number of a part or all of at least one remote electrical tilt device; and
a transceiver unit, configured to send the second information to a first communication apparatus.

45. The apparatus according to claim 44, wherein
the second information indicates the frequency band and the serial number of the part or all of the remote electrical tilt device; or
the second information indicates the serial number of the part or all of the remote electrical tilt device.

46. The apparatus according to claim 45, wherein the second information indicates the frequency band and the serial number of the part or all of the remote electrical tilt device;
the transceiver unit is further configured to send first query information to an antenna apparatus, wherein the antenna apparatus comprises the at least one remote electrical tilt device;
the transceiver unit is further configured to receive first response information from the antenna apparatus, wherein the first response information is a response to the first query information, and the first response information comprises the frequency band and the serial number of the part or all of the remote electrical tilt device; and
the processing unit is further configured to determine the second information based on the first response information.

47. The apparatus according to claim 45, wherein the second information indicates the serial number of the part or all of the remote electrical tilt device;
the transceiver unit is further configured to send second query information to an antenna apparatus, wherein the antenna apparatus comprises the at least one remote electrical tilt device;
the transceiver unit is further configured to receive second response information from the antenna apparatus, wherein the second response information is a response to the second query information, and the second response information comprises the serial number of the part or all of the remote electrical tilt device; and
the processing unit is further configured to determine the second information based on the second response information.

48. The apparatus according to any one of claims 44 to 47, wherein
the transceiver unit is further configured to receive indication information from the first communication apparatus, wherein the indication information indicates to send the second information.

49. A communication apparatus, comprising:
a transceiver unit, configured to receive query information from a third communication apparatus; and
the transceiver unit is further configured to send second information to the third communication apparatus, wherein the second information is used for determining a correspondence between a frequency band and a serial number of a part or all of the at least one remote electrical tilt device, and
the second information is a response to the query information.

50. The apparatus according to claim 49, wherein
the second information indicates the frequency band and the serial number of the part or all of the remote electrical tilt device; or
the second information indicates the serial number of the part or all of the remote electrical tilt device.

51. A communication apparatus, comprising a processor, wherein the processor is configured to enable, by executing a computer program or instructions or by using a logic circuit, the communication apparatus to perform the method according to any one of claims 1 to 25.

52. The communication apparatus according to claim 51, wherein the communication apparatus further comprises a memory, and the memory is configured to store the computer program or the instructions.

53. The communication apparatus according to claim 51 or 52, wherein the communication apparatus further comprises a communication interface, and the communication interface is configured to input and/or output a signal.

54. A communication system, comprising a first communication apparatus and a second communication apparatus, wherein
the first communication apparatus is configured to generate first information, wherein the first information is used for determining a first mapping table, and each mapping relationship in the first mapping table indicates a correspondence between one remote electrical tilt device and one or more cells;
the first communication apparatus is further configured to send the first information to the second communication apparatus;
the second communication apparatus is configured to receive the first information from the first communication apparatus; and
the second communication apparatus is further configured to generate the first mapping table based on the first information, wherein
the first communication apparatus is configured to manage at least one remote electrical tilt device and at least two cells.

55. The system according to claim 54, wherein the first communication apparatus is further configured to perform the method according to any one of claims 2 to 11.

56. The system according to claim 54 or 55, wherein the second communication apparatus is further configured to perform the method according to any one of claims 13 to 18.

57. The system according to any one of claims 54 to 56, wherein the communication system further comprises a third communication apparatus, and the third communication apparatus is configured to perform the method according to any one of claims 19 to 23.

58. The system according to any one of claims 54 to 57, wherein the communication system further comprises an antenna apparatus, and the antenna apparatus comprises the at least one remote electrical tilt device; and
the antenna apparatus is configured to perform the method according to claim 24 or 25.

59. A communication apparatus, comprising a logic circuit and an input/output interface, wherein the input/output interface is configured to input and/or output a signal, and the logic circuit is configured to perform the method according to any one of claims 1 to 25.

60. A computer-readable storage medium, wherein the computer-readable storage medium stores a computer program or instructions, and when the computer program or the instructions are run on a computer, the method according to any one of claims 1 to 25 is performed.

61. A computer program product, comprising instructions, wherein when the instructions are run on a computer, the method according to any one of claims 1 to 25 is performed.
